# EUROPÄISCHE PATENTSCHRIFT

(11) **EP 3 022 041 B1**
(45) Veröffentlichungstag und Bekanntmachung des Hinweises auf die Patenterteilung: **17.05.2017**
(21) Anmeldenummer: 14736630.6
(22) Anmeldetag: 01.07.2014
(51) Int. Cl.: B29C 55/20, B29C 55/08

(54) **SEITENFÜHRUNGSSCHIENE FÜR EIN TRANSPORTSYSTEM, INSBESONDERE EINE RECKANLAGE**
LATERAL GUIDE RAIL FOR A TRANSPORT SYSTEM, IN PARTICULAR A STRETCHING UNIT
RAIL DE GUIDAGE LATÉRAL POUR DISPOSITIF DE TRANSPORT, NOTAMMENT D'UNE INSTALLATION D'ÉTIRAGE

(30) Priorität: 18.07.2013 DE 102013011953
(43) Veröffentlichungstag der Anmeldung: 25.05.2016
(73) Patentinhaber: Brückner Maschinenbau GmbH & Co. KG, 83313 Siegsdorf (DE)
(72) Erfinder: HÄUSL, Tobias, 83278 Traunstein (DE); AUMEIER, Wolfram, 83324 Ruhpolding (DE)
(74) Vertreter: Flach, Dieter Rolf Paul
(86) Internationale Anmeldenummer: PCT/EP2014/001799
(87) Internationale Veröffentlichungsnummer: WO 2015/007366

(56) Entgegenhaltungen:
- WO-A1-2006/035922
- JP-A- 2011 189 630
- US-A- 2 728 941

## Beschreibung

Die Erfindung betrifft eine Seitenführungsschiene für ein Transportsystem, insbesondere für eine Reckanlage nach dem Oberbegriff des Anspruches 1.

Reckanlagen finden insbesondere bei der Kunststofffolien-Herstellung Anwendung. Bekannt sind sogenannte Simultan-Reckanlagen, in welchen ein Kunststofffilm gleichzeitig in Quer- und Längsrichtung gereckt werden kann. Bekannt sind ebenso sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Die zu reckende Materialbahn, in der Regel also ein Kunststofffilm, wird mittels Kluppen erfasst, die auf beiden Seiten der zu reckenden Materialbahn auf umlaufendenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/ oder Wärmenachbehandlung unterzogen werden kann.

Eine simultane oder sequentielle Reckanlage umfasst eine Führungsschiene längs der die Kluppen- bzw Transporteinheiten geführt werden.

Es sind auch Transportsysteme bekannt, bei denen das Gewicht der Transporteinheiten (Kluppeneinheit und Ketteneinheit; Linearmotoreinheit, bei Linearmotor angetrieben Recksystemen, oder die Einheiten der Führungs- und Steuerungssysteme bei sog. Pentagraphsystemen) direkt auf der Seitenführungsschiene aufgenommen werden. Bei den genannten Transportsystemen erfolgt die Bewegung der Kluppen über Gleit- bzw. Rollensysteme.

Eine Breitreck-Anlage mit einer Führungsschiene ist grundsätzlich z.B. aus der EP 471 052 B1 bekannt geworden. Eine umlaufende Transportkette wird hier über Kluppenwagen an der Führungsschiene verschiebbar geführt und abgestützt. Dazu sind an den beiden gegenüberliegenden Vertikalflächen der im Querschnitt rechteckförmigen Führungsschiene jeweils zwei um eine Vertikalachse rotierende Stütz- oder Führungsräder vorgesehen. Weitere Stützräder drehen um eine Horizontalachse und sind so angeordnet, dass das Gewicht der Transportkette und der Kluppen auf der oben liegenden, horizontal ausgerichteten Schmalseite der Führungsschiene abgestützt wird. Grundsätzlich können diese Rollenlager auch durch Gleitlager ersetzt werden, die dann auf der Führungseinrichtung entlang bewegt werden.
Über die Gleit- bzw. Rollenlager werden die Reckkräfte, die Kettenlängskräfte, die Fliehkräfte und je nach Konstruktion, die Gewichtskräfte, auf die Führungsschiene übertragen. Eine Kühlung, Schmierung bzw. Entlastung der Führungsschiene ist also insbesondere in den Bereichen notwendig, wo Seitenkräfte, wie z.B. die Reckkraft, auftreten.

Üblicherweise müssen die über die Gleitreibung fortbewegten Teile der Transportkette, die sich auf einer Führungsschiene abstützen, mittels Öl entsprechend geschmiert werden, um den Reibungskoeffizienten zu senken und damit indirekt auch zu einer Kühlung des Systems beizutragen. Nach dem Stand der Technik können diese Führungsschienen indirekt über die Tragstruktur des Transportsystems gekühlt werden.
Dazu ist an den Schienen an geeigneten Stellen, in der Regel an der Trageinrichtung für die Führungsschienen ein von einem Kühlmittel durchflossenes Hohlrohr angebracht worden, welches als Wärmesenke dient, um hierdurch letztlich auch zur Kühlung der Führungsschiene beizutragen. Gemäß einer vorbekannten Lösung sind diese von einem Kühlmittel durchflossenen Kühlrohre an den Gleitleisten seitlich angeschraubt worden, siehe beispielsweise US2728941, in der Kühlrohre in ähnlicher Konfiguration offenbart sind. Durch den hohen Wärmewiderstand jedoch ist mit dieser Lösung ein vollständiger Abtransport der Reibleistung nur bedingt möglich. Zudem wird zwangsläufig auch der Träger bzw. die angebaute Kühlleiste mitgekühlt, was zu erheblichen Kühlverlusten führt.

Beide Lösungen haben den großen Nachteil, dass die Wärme über einen langen Weg (also einen vergleichsweise großen Wärmewiderstand) abgeführt werden muss. Um die geforderte Wärmemenge abzutransportieren ist ein sehr großer Temperaturunterschied notwendig (**Δ**t). Bedenkt man dabei ferner, dass die Kühlung der Führungsschiene auch innerhalb eines Ofens durchgeführt wird und durchgeführt werden muss, der der Erwärmung der zu reckenden Folienbahn dient, so wird dadurch der weitere Nachteil verursacht, dass im Falle von zu niedrigen (tiefen) Kühltemperaturen im Ofen dann eine Tendenz zur Kondensatbildung besteht, d.h., dass ausgedampfte Rückstände aus dem Reckprozess (Oligomere) sich an den kalten Stellen des Transportsystems ablagern und das Transportsystem dadurch sehr stark verschmutzt wird. Aus diesem Grund wird in realen Anlagen die Kühlmediumtempertur nicht unter 120°C zugelassen. Dies führt dazu, dass diese Kühlungsarten nur geringe Reibleistungen abtransportieren. Bei hohen Anlagengeschwindigkeiten (hohen Reibleistungen) ist diese Art der Kühlung also nicht mehr effizient genug.

Ferner muss bedacht werden, dass eine Kühlung der Führungsschiene im Bereich der Gelenke nicht möglich ist, da hier die Schiene im elastischen Bereich gebogen wird. Dies stellt einen großen Nachteil dar, da somit thermisch hoch belastete Bereiche ungekühlt sind, was zum Vercracken des Schmieröls führt.

Dabei wäre eine Kühlung der Führungsschieneneinrichtungen auch im Bereich der Gelenke sehr vorteilhaft, da dadurch eine Reduzierung des Ölverbrauchs und damit auch eine Vermeidung von Ölverschmutzungen auf dem herzustellenden Produkt (in der Regel in Form eines Kunststofffolienfilms) erreicht werden würde.

Aufgabe der vorliegenden Erfindung ist es, ausgehend von dem erläuterten Stand der Technik eine verbesserte Führungsschiene für ein Transportsystem, insbesondere für ein Transportsystem zum Recken einer Materialbahn, wie beispielsweise eines Kunststofffolienfilms zu schaffen, welche insgesamt besser gekühlt werden kann und damit einen reibungsärmeren und verschleißfreieren Betrieb unter Benötigung weniger Energie bezüglich einer vorgegebenen Anlagengeschwindigkeit erlaubt.

Die Aufgabe wird durch die im Anspruch 1 angegebenen Merkmale gelöst. Vorteilhafte Ausgestaltungen sind in den Unteransprüchen angegeben.

Durch die vorliegende Erfindung wird eine extrem optimierte Ausgestaltung einer Führungsschiene, insbesondere eines Transportsystems, insbesondere für ein Transport-Kettensystem mit zugehörigen Kluppen zum Einspannen, Halten, Fortbewegen und Recken einer Materialbahn geschaffen, wodurch erhebliche Vorteile realisierbar sind. Dabei kann das erfindungsgemäße System mit deutlich höheren Geschwindigkeiten betrieben werden, ohne dass dies zu einer Überhitzung oder auch zum Entstehen zu großer Reibkräfte führen würde.

Im Rahmen der erfindungsgemäßen Lösungen lassen sich unter anderem die nachfolgend wiedergegebenen Vorteile realisieren, nämlich:
- Die erfindungsgemäße Kühlung ermöglicht eine direkte Kühlung einer Führungsschiene, insbesondere auch in Form einer Gleitschiene.
- Zudem können die Führungsschienen, auch in Form sogenannter Gleitschienen über eine Gelenk-Konstruktion hinweg gekühlt werden.
- Durch das niedrigere Temperaturniveau werden für die miteinander gleitenden Teile des Transportsystems, also die bewegten Teile des Transportsystems gegenüber der feststehenden Führungsschiene, höhere Geschwindigkeiten ermöglicht als bisher (unter anderem auch deshalb, weil durch die Kühlung ein Vercracken des Öls vermieden wird).
- Durch die direkte Kühlung wird Energie eingespart, da nur die Gleitfläche der Führungsschiene selbst und nicht weitere Teile der gesamten Anlage mit gekühlt werden müssen.
- Eine Materialbehandlung, z.B. eine Nitrierung der Führungsschiene, kann im Rahmen der Erfindung umgesetzt werden.
- Eine Kondensatbildung wird gegenüber herkömmlichen Lösungen deutlich reduziert, da nur die Führungsschiene, beispielsweise in Form einer Gleitleiste ein niedriges Temperaturniveau aufweist, und dies auch im Bereich eines Ofens, wenn dort die zu kühlende Führungsschiene durch den Ofen hindurchgeführt ist.
- Zudem wird eine Verschmutzung der Folie durch eventuell verteilte Kondensat- und/oder Schmiermittelrückstände verringert.
- Eine durchgehende Kühlung im Umlaufweg ist nur in bestimmten Bereichen notwendig.
- Im Rahmen der Erfindung kann eine direkte Kühlung realisiert werden.

Die im Rahmen der Erfindung vorgeschlagene direkte Kühlung der Führungsschiene ist für alle Arten von Transportsystemen verwendbar, die mit entsprechenden Führungsschienen ausgestattet sind. Als Transportsysteme kommen z.B. sowohl sequentielle (TDO transversal direction oriented tenter) als auch simultane Pentagraph- und Linearmotorsysteme mit Rollen- und Gleitlagersysteme in Betracht. Alle diese Systeme können mit einer oder mehreren direkt gekühlten Führungs- und Tragschienen versehen werden. Dabei kann das erfindungsgemäße Kühlprinzip wie erwähnt auf alle Arten von Transportsystemen angewandt werden, bei denen gleitende, bewegte Teile längs der Führungsschiene verfahren werden sollen. Als Beispiel soll auch das sogenannte Duorail-System der Fa. Brückner Maschinenbau GmbH (www.brueckner.com) erwähnt werden. Genauso gelten die vorstehend genannten Ausführungen auch für Monorail-Systeme, bei denen die Führungsschienen aber auch gleichzeitig als Tragschiene für die Aufnahme der gesamten Gewichte der Transporteinheiten, d.h. der Transportkette dient (anders als beispielsweise bei der US 5 797 172 A, bei der unterhalb der Führungsschiene eine separate Tragschiene zusätzlich vorgesehen ist, die vor allem der Gewichtaufnahme und Gewichtabstützung dient).

Die erfindungsgemäße Lösung schlägt von daher eine ganz spezifische Führungsschiene oder Führungsschienen-Einrichtung vor, nämlich mit einem integrierten Kühlsystem.

Gemäß einer Variante der Erfindung ist dabei die Führungsschiene mit einer Reihe von Querbohrungen versehen, die allgemein als zumindest leicht zick-zack-förmig verlaufend bezeichnet werden können. Der jeweilige Bohrungsanfang wird anschließend verschlossen. Die zick-zack-förmigen Leitungsabschnitte schneiden sich im Inneren der Führungsschiene, so dass dadurch ein durchgängiger Kühlungskanal gebildet wird.

Dadurch können entsprechende Leitungen auch mehrfach nebeneinander verlaufend ausgebildet sein, auch mit Verzweigungskanälen, Zusammenführungskanälen etc.

In einer alternativen Ausführungsform ist vorgesehen, dass ein flexibles Kühlungsrohr innerhalb zweier oder mehrerer Halbschalen zu einer kompakten, auch im Bereich von Gelenken verformbaren Führungsschiene zusammengefügt wird.

Schließlich ist es auch möglich, sogenannte Heat-Pipes, d.h. sogenannte Wärmerohre einzusetzen, die beispielsweise über Sackbohrungen seitlich an der Schmalseite der Führungsschiene eingesteckt werden, um dadurch die Wärme von innen nach außen hin abführen zu können. Gegebenenfalls können diese Heat-Pipes oder Wärmerohre auch ergänzend zu den vorstehend genannten Maßnahmen eingesetzt werden.

Nur der Vollständigkeit halber wird auch erwähnt, dass es schließlich auch möglich wäre Flexrohre zu verwenden, die an der einen Längsseite der Führungsschiene durch Verwendung geeigneter Materialien aufgelötet oder aufgeschweißt sein könnten, um hier in einem unmittelbaren direkten Kontakt zu einer ausreichenden Kühlung beitragen zu können.

Die erfindungsgemäße Lösung zeichnet sich also vor allem dadurch aus, dass die Schiene, unabhängig ob sie als Führungsschiene, als Transportschiene oder beides, nämlich als Führungs- und Transportschiene dient, mit einer direkten Kühlung ausgestattet ist. Diese direkte Kühlung kann in geraden Schienenabschnitten aber auch in bogenförmigen Schienenabschnitten ausgebildet sein, auch in Schienenabschnitten, die mit Gelenken versehen sind. Mit anderen Worten kann die Kühlung über die Gelenke hinweg realisiert werden. Durch die im Rahmen der Erfindung geschilderten Maßnahmen ergibt sich nicht nur eine verbesserte Kühlung wie mit den herkömmlichen Lösungen, sondern vor allem auch eine gleichmäße Lösung der Wärmeverteilung. Mit anderen Worten trägt dies zu einer Verringerung von ansonsten bestehenden Wärmegradienten im Schienensystem bei.

Ferner soll angemerkt werden, dass die vorstehend genannten Lösungen in einem Gesamtsystem zumindest abschnittsweise realisiert sein können. Teilweise ist es auch möglich, zwei Systeme an einem gleichen Schienenabschnitt umzusetzen.

Die erläuterte Lösung eignet sich insbesondere für Reckanlagen, nämlich beispielsweise Simultan- oder aber sequentielle Reckanlagen, d.h. mit einem Breitreckwerk. Dabei können die erwähnten Führungs- und/oder Tragschienen beispielsweise auch in simultanen Reckanlagen eingesetzt werden, die mittels Linearmotorantrieb betrieben werden oder die mit Steuer- und Führungsschienen in simultanen Pentagraphsystemen arbeiten.

Die Erfindung wird nachfolgend anhand von Zeichnungen näher erläutert. Dabei zeigen im Einzelnen:
- Figur 1a:: eine schematische Draufsicht auf eine Querreckanlage mit einer gemeinsamen Trägerstruktur für die Prozessseite und die Rücklaufseite innerhalb des Ofens;
- Figur 1b:: eine zu Figur 1a abgewandelte Ausführungsform einer zur Prozessseite getrennten Rücklaufseite für die Transportkette außerhalb des Ofens,
- Figur 2:: eine Querschnittsdarstellung durch eine Trageinrichtung mit umlaufender Transportkette und dargestellten Kluppen im Falle einer gemeinsamen Trageinrichtung für die Reckseite RS und die Rücklaufseite RL, wie dies grundsätzlich anhand von Figur 1a dargestellt ist;
- Figur 3:: eine ausschnittsweise räumliche Darstellung einer Führungsschiene mit darin angedeuteten Querbohrungen;
- Figur 4:: eine Längsschnittdarstellung durch eine erfindungsgemäße Führungsschiene mit einem Kühlkanal;
- Figur 5a:: eine zu Figur 4 ähnliche Darstellung bezüglich einer Führungsschiene dargestelltem Kühlkanal, wobei die Querbohrungen von der gegenüberliegenden Schmalseite von der Führungsschiene eingebracht sind;
- Figur 5b:: ein abgewandeltes Ausführungsbeispiel zu Figur 4;
- Figur 6:: ein nochmals abgewandeltes Ausführungsbeispiel in einer Längsschnittdarstellung durch die Führungsschiene mit zwei getrennten zick-zack-förmig verlaufenden Kühlkanälen;
- Figur 6a:: ein Querschnitt zur Führungsschiene bezüglich einer mittigen Befestigung der Führungsschiene an einer Tragstruktur;
- Figur 6b:: eine Seitenansicht auf die in Figur 6a wiedergegebene Führungsschiene mit einem oben und einem unten liegenden Kühlkanal, die zumindest näherungsweise symmetrisch zu einer mittleren Orthogonalebene der Führungsschiene ausgebildet sind;
- Figur 7:: eine ausschnittsweise Längsschnittdarstellung durch einen Führungsschienen-Endabschnitt mit dort vorgesehenen Verbindungsbohrungen;
- Figur 8:: eine Querschnittsdarstellung quer zur Führungsschiene im Anschlussbereich in den Führungsschienen-Endstücken;
- Figur 9:: eine vergleichbare Darstellung zu Figur 8 unter Wiedergabe der dort montierten Anschlussstücke;
- Figur 10a:: eine Gesamtseitenansicht einer Führungsschiene im Längsschnitt;
- Figur 10b:: eine entsprechende Darstellung zu Figur 10a jedoch in Seitenansicht;
- Figur 11:: eine ausschnittsweise wiedergegebene räumliche Darstellung einer Gelenkanordnung eines Transportabschnittes einer Reckanlage mit erfindungsgemäßer Führungsschiene;
- Figur 12:: eine Detaildarstellung ähnlich zu Figur 11;
- Figur 13:: eine Querschnittsdarstellung durch eine Führungsschiene, an der eine im Querschnitt dargestellte Kluppe einer Transporteinheit gleitend verfahrbar ist;
- Figur 13a:: eine Schnittdarstellung durch ein Gleitsystem, bei dem eine Führungsschiene auch als Tragschiene für eine Kluppen-Ketteneinheit dient, und zwar mit einer oben- und einer unten liegenden Führungsschiene;
- Figur 13b:: eine Detaildarstellung aus Figur 13a;
- Figur 14:: ein abgewandeltes Ausführungsbeispiel mit einem sandwichartigen Führungsschienen-Aufbau mit zwischengeschaltetem flexiblen Kühlrohr;
- Figur 14a:: eine Querschnittsdarstellung durch die Führungsschiene mit einem Kühlrohr ähnlich zu Figur 14, jedoch in explosionsartiger Darstellung mit den dazu benötigten beiden Halbschalen und dem dazwischen befindlichen Kühlrohr;
- Figur 14b:: eine schematische Draufsicht auf eine mit entsprechenden Krümmungsabschnitte ausgebildete Führungsschiene im Reckbereich;
- Figur 14c:: eine ausschnittsweise Draufsicht auf eine Führungsschiene unter Verwendung von zwei Halbschalen mit Maßnahmen zur Verbesserung des Krümmungsverhaltens;
- Figur 14d:: eine entsprechende Darstellung zu Figur 14c bezüglich eines abgewandelten Ausführungsbeispiels;
- Figur 15:: ein abgewandeltes Ausführungsbeispiel zu Figur 14 in Querschnittsdarstellung unter Verwendung von Blechpaketen oder Blechstreifen für die Führungsschienen-Hälften;
- Figur 16:: eine Querschnittsdarstellung in Abwandlung zu Figuren 14 und 15 mit zwei übereinander vorgesehenen Kühlkanälen;
- Figur 17:: eine schematische Darstellung bezüglich des prinzipiellen Verbindens zweier Kühlkanäle in zwei Führungsschienen;
- Figur 18:: eine Querschnittsdarstellung durch eine Führungsschiene mit einem Kühlkanal bezüglich eines abgewandelten Ausführungsbeispiels;
- Figur 19:: eine Längsschnittdarstellung durch das Ausführungsbeispiel gemäß Figur 18;
- Figur 20:: eine räumliche Darstellung eines Flexrohres bezüglich eines abgewandelten Ausführungsbeispiels; und
- Figur 21:: eine Querschnittsdarstellung durch eine Führungsschiene unter Verwendung des in Figur 20 gezeigten Flexrohres.

Die nachfolgend noch im Einzelnen erörterte, gekühlte Führungsschiene kann beispielsweise in einer Reckanlage, d.h. einer sequentiellen Reckanlage und/oder einer Querreckanlage, die auch Teil einer sequentiellen Reckanlage sein kann, oder beispielsweise in einer Simultan-Reckanlage verwirklicht werden.

Die im Rahmen der Erfindung nachfolgend erörterte Führungsschiene kann also beispielsweise auch bei einer linearmotorangetriebenen Simultan-Reckanlage wie aber auch bei einer simultanen Pentagraph-Reckanlage mit Steuer- und Führungsschienen verwirklicht sein. Beschränkungen bestehen insoweit nicht.

### A: Grundsätzlicher Aufbau einer Reckanlage:

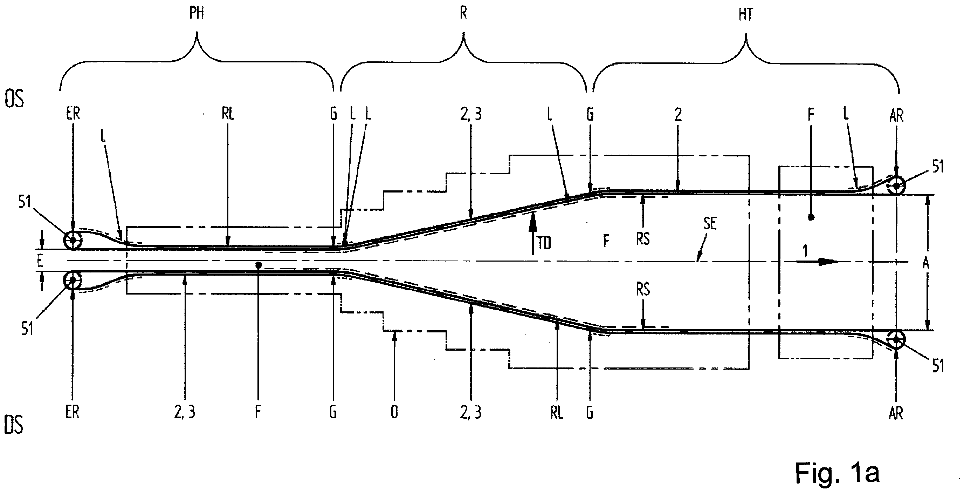

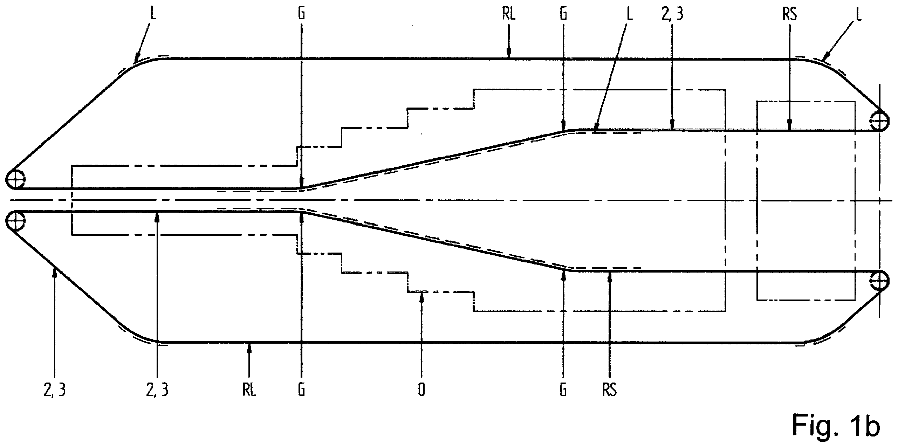

Da Reckanlagen einer der Hauptanwendungsfälle für die erfindungsgemäß gekühlte Führungsschiene sind, soll nachfolgend anhand von Figur 1a und 1b der grundsätzliche Aufbau einer derartigen Reckanlage kurz erläutert werden.

Die anhand von Figur 1a beschriebene Folien-Breit- oder Quer-Reckanlage oder Simultan-Reckanlage (unter Verwendung von linearmotorgetriebenen Antriebseinheiten oder unter Verwendung von simultanen Pentagraphsystemen mit Steuer- und Führungsschienen) umfasst bekanntermaßen zwei symmetrisch ausgebildete Antriebssysteme. In Figur 1a sind die beiden vertikal zur Zeichen-Ebene verlaufenden und symmetrisch zur Symmetrie-Ebene SE angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 (also in Maschinenrichtung MD) hindurch bewegt wird. Die erläuterte Reckanlage kann dabei auch Teil einer sequentiellen Reckanlage sein, die üblicherweise eine der Querreckanlage (Querreckrahmen) vorgelagerte Längsreckstufe umfasst (im Zweifelsfall kann diese Längsreckstufe der Querreckstufe aber auch nachgeordnet sein). Die in Figur 1a gezeigte Reckanlage umfasst zwei auf den beiden umlaufenden Bahnen 2 in Umlaufrichtung angetriebene Ketten-, Pentagraph- oder Linearmotor-Transportsysteme 3.

Eine biaxiale (wenn also eine Längsreckanlage der gezeigten Querreckanlage vorgelagert ist) oder eine unverstreckte Folie F (wobei im Folgenden von Folie oder Film F gesprochen wird, obgleich mit einer derartigen Reckanlage allgemein eine Behandlungsbahn F entsprechend behandelt und quergereckt und im Falle einer Simultanreckanlage auch zusätzlich noch längsgereckt werden kann, so dass die Erfindung insoweit nicht auf eine Kunststofffolienbahn beschränkt ist) läuft im Einlaufbereich E in die Reckanlage ein und wird dort von Kluppen an beiden Rändern ergriffen und eingeklemmt, und zwar auf der so genannten Operator-Seite (OS - operator side) sowie der antriebsseitigen Drive-Seite (DS - drive side). Die Folie F wird dann in einer nachfolgenden Vorheizzone PH erwärmt, und nachfolgend einer Reckzone R zugeführt, um hier in Querrichtung TD verstreckt zu werden. Anschließend durchläuft der verstreckte Film F verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Reckmaschine.

Abweichend vom gezeigten Ausführungsbeispiel kann auch eine getrennte Trägerstruktur für die Reckseite RS sowie für die Rücklaufseite RL vorgesehen sein, wie dies beispielsweise anhand von Figur 1b gezeigt ist. In diesem Fall verläuft nur die reckseitige Trägerstruktur mit der zugehörigen Führungsschiene und einer Gewichtslaufschiene durch den Ofen O und eine entsprechend ausgebildete weitere Trägerstruktur ist auf der Rücklaufseite RL außerhalb des Ofens O vorgesehen.

In den Figuren 1a und 1b sind zudem die gekühlten Abschnitte CL einer Führungsschiene dargestellt, die nachfolgend teilweise auch als Seitenführungsschiene bezeichnet wird. Diese Seitenführungsschiene muss vor allem im Bereich der Reckzone gekühlt werden. Zudem müssen die Führungsschienen auch im Bereich der Umkehrung der Reckanlage gekühlt werden. Die dort verwendeten Seitenführungsschienen mit einem festen Radius werden teilweise auch als Gleitleisten bezeichnet. Eine Kühlung ist aber vor allem auch bei den Führungsschiene am Anfang und am Ende der Reckzone notwendig. Eine besondere Herausforderung stellt die Kühlung über dort notwendige Gelenke dar. Denn hier wird die Schiene im elastischen Bereich gebogen, je nachdem, welcher Reckwinkel bzw. welche Filmproduktionsbreite vom Anwender eingestellt werden soll und muss. Auch beim Verstellen dieser EinstellParameter müssen die Träger für die Führungsschiene entsprechend mitbewegt werden, wobei die Schienen an den Gelenken im elastischen Bereich gebogen werden. Eine Kühlung in diesem Gelenkbereich war bisher mit bekannten Methoden nicht möglich, so dass eine Kühlung der Gelenke zwangsläufig unterblieb.

### B: Grundsätzlicher Trägeraufbau einer vorstehend erläuterten Reckanlage:

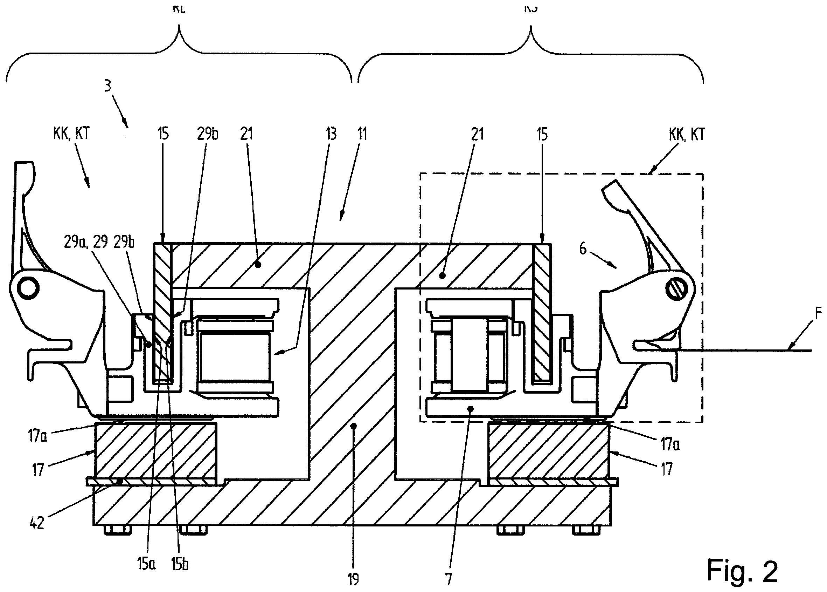

Die erläuterte Tragstruktur kann als gemeinsame Tragstruktur für das Transportsystem sowohl auf der Reckals der Prozessseite RS als aber auch auf der Rücklaufseite RL verwendet werden, wie dies grundsätzlich anhand von Figur 1a in schematischer Draufsicht und anhand von Figur 2 in vertikaler Querschnittsdarstellung durch eine längs einer Führungsschiene verfahrbare Transportkette gezeigt ist. Ansonsten kann die Tragstruktur, wie anhand von Figur 1b erläutert, auf der Reck- bzw. Prozessseite RS als auch auf der Rücklaufseite RL getrennt ausgebildet sein.

In Figur 2 ist ein Querschnitt durch ein Beispiel eines Transportsystems zu ersehen, nämlich mit einer gemeinsamen Tragstruktur 11 (Trägeraufbau 11), die neben einem in der Mitte angeordneten, eher vertikal verlaufenden Träger 19, einen darüber abgestützten Querträger 21 umfasst, an dessen gegenüberliegenden voneinander weg weisenden Enden jeweils die von oben nach unten verlaufende, im Querschnitt rechteckförmige Führungsschiene 15 montiert ist, nämlich wie erwähnt auf der Reckseite RS zum einen und auf der Rückseite RL zum anderen. Bei einer derartigen gemeinsamen Traganordnung befindet sich das Transportsystem gemeinsam innerhalb eines Ofens O (Figur 1a). Dieser Ofen umgibt sowohl die Vorheizzone PH, die Reckzone R als auch die Nachheizzone oder Relaxationszone HT, so dass letztlich nur die auf der Einlass- und Auslassseite vorgesehenen Umlenk- und Antriebssysteme außerhalb des Ofens O zu liegen kommen. Ansonsten kann auch eine getrennte Trägerstruktur für die Reckseite RS wie die Rücklaufseite RL vorgesehen sein, so dass in diesem Fall nur die reckseitige Trägerstruktur mit der zugehörigen Führungsschiene und der Gewichtslaufschiene durch den Ofen O verläuft und eine entsprechend ausgebildete weitere Trägerstruktur auf der Rücklaufseite außerhalb des Ofens O vorgesehen ist. Ein entsprechender Aufbau in schematischer Draufsicht ist in Figur 1b gezeigt.

Wie erwähnt, wird die Transportkette 13 sowohl auf der Auslauf- als auch der Einlaufseite durch Auslauf- und/oder Einlaufräder AR bzw. ER angetrieben und umgelenkt.

Um das System flexibel zu gestalten, sind ferner an verschiedenen Stellen Gelenke G für die Führungsschiene und die Tragschiene vorgesehen, worauf später noch eingegangen wird. Durch unterschiedliche Einstellung dieser Gelenke lassen sich insbesondere in der Reckzone R verschiedene Querreckverhältnisse einstellen.

Diese Führungsschienen-Gleitlagerung 29 umfasst einen im Querschnitt U-förmigen Gleitkörper oder Gleitschuh 29a mit entsprechender Breite oder Länge in Richtung der Führungsschiene 15, um hier die entsprechenden Führungskräfte aufzunehmen.

Aus dieser Darstellung ist ferner ersichtlich, wie eine betreffende Kluppen-Ketteneinheit KK mit seinem im Querschnitt U-förmigen Gleitlager 29 (Gleitschuh 29a) geführt ist, indem die entsprechenden beiden gegenüberliegenden Gleitlagerflächen 29b an den gegenüberliegenden Seiten- oder Außenflächen 15a, 15b der als Führungsschiene konzipierten Führungsschiene 15 während der Vorwärtsbewegung der Transportkette anliegen und dadurch geführt werden.

In Figur 2 ist die erwähnte Kluppen-Ketteneinheit KK eingezeichnet, die auch allgemein als Kluppen-Transporteinheit KT bezeichnet werden kann. Im Falle einer Reckanlage umfasst diese Kluppen-Transporteinheit KT bzw. die Kluppen-Ketteneinheit KK das sogenannte Kluppenteil 6, welches mit dem Ketten- oder Transportteil 7 über ein sogenanntes Brückenteil BR verbunden ist. Das Kluppenteil weist den üblichen Aufbau auf, um den Rand eines zu reckenden Films F während des Durchlaufs durch die Anlage eingeklemmt festzuhalten und am Ende der Anlage wieder freizugeben.

Wie bekannt, befindet sich diese Kluppen-Ketteneinheit KK bzw. die Kluppen-Transporteinheit KT mit ihrem jeweiligen Kluppenteil 6 und dem Kettenteil 7 in einem umlaufenden Transportsystem 3, welches zum einen die erwähnte Trägerstruktur 11 mit dem entsprechenden Trägeraufbau sowie die umlaufende Transportkette 13 umfasst, an der die erwähnten Kluppenteile 6 mitlaufend befestigt sind.

### C: Verbundene Querbohrungen in der Führungsschiene:

Nachfolgend wird ein erfindungsgemäßes Lösungsprinzip zur Kühlung einer im Querschnitt in der Regel rechteckförmigen Führungsschiene 15 erläutert, wobei derartige Führungsschienen üblicherweise zwei parallel und beabstandet zueinander liegende, nach außen weisende Lauf- oder Gleitflächen 15a und 15b umfassen, die in der Regel nicht nur parallel, sondern auch vertikal verlaufend ausgerichtet sind (in Abhängigkeit des Verlaufs der Führungsbahn).

Von daher handelt es sich vom Grundprinzip her um leistenförmige Führungsschienen, deren Breite oder Dicke B im Verhältnis zu deren Höhe H schmal ist. Mit anderen Worten beträgt die Höhe der Führungsschienen üblicherweise mehr als das Drei- oder Vierfache der Breite oder Dicke B.

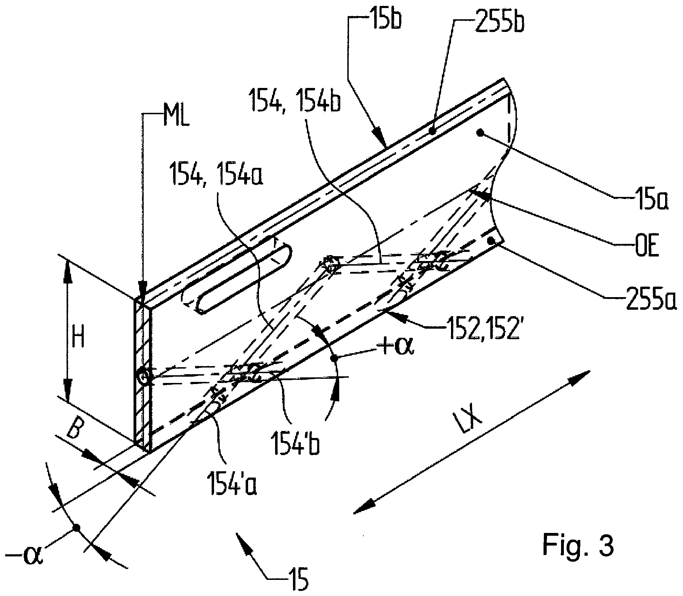

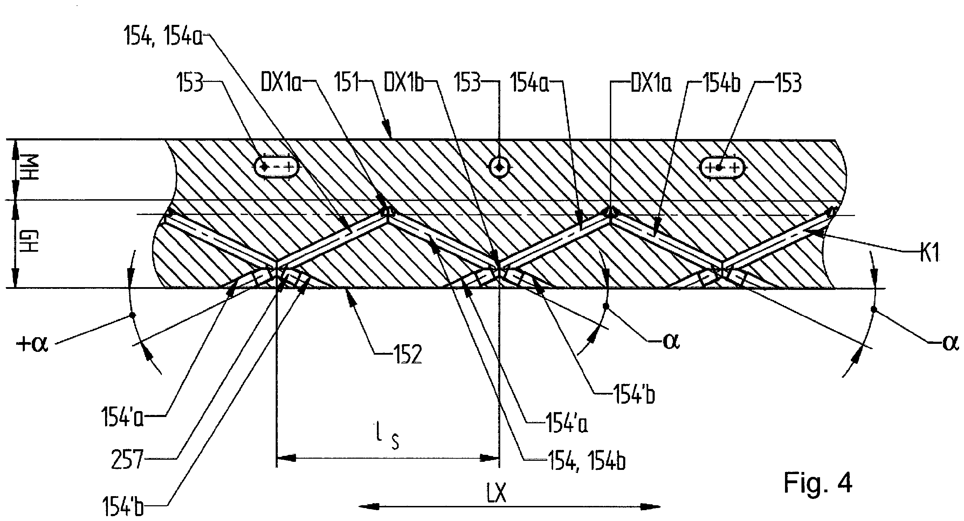

In Figur 3 ist in schematischer räumlicher Darstellung ausschnittsweise eine Führungsschiene mit einer Dicke B und einer Höhe H gezeigt. Figur 4 zeigt eine vertikale Längsschnittdarstellung durch die Führungsschiene.

Die einzelnen Führungsschienen-Abschnitte weisen bevorzugt eine Länge LF auf, die insbesondere mehr als 2 m, 2,5 m oder auch mehr als 3 m, 4 m oder sogar 5 m beträgt. Längen um 6 m oder mehr sind durchaus sehr erwünscht, auch deshalb, um Schienenstöße zu vermeiden.

Um in diesem Fall mit einem vertretbaren Aufwand eine Kühlkanalanordnung im Inneren der Führungsschiene vorzunehmen, werden nunmehr Querbohrungen 154 in die Führungsschiene eingebracht. Wie aus Figur 3 und aus Figur 4 in einer schematischen Längsschnittdarstellung parallel zu den größer dimensionierten Längs- oder Breitseiten 15'a, 15'b (wobei die Breitseiten 15'a, 15'b den Außenflächen, d.h. den Gleitflächen 15a, 15b der Führungsschiene 15 entsprechen) zu entnehmen ist, werden diese Querbohrungen 154 mit einem Durchmesser kleiner als die Dicke B der Führungsschiene 15 beispielsweise in einem Winkel α gegenüber der Längsachse LX eingebracht. Dieser Winkel α stellt also den Neigungswinkel bezüglich der Ausrichtung einer Querbohrung 154 gegenüber der Längsachse LX und damit auch gegenüber der Unter- oder Oberkante 152, 151 dar.

Bei dem Ausführungsbeispiel gemäß Figuren 2 und 3 werden diese Querbohrungen 154 nur von einer Schmalseite 152', im gezeigten Ausführungsbeispiel von der unteren Schmalseite 152' oder Unterkante 152 eingebracht, und zwar in einem Winkel +α bzw. -α jeweils bezogen zur Längsrichtung LX oder Unterkante 152 der Führungsschiene 15. Dabei sind die Bohrungen als Sackbohrungen ausgebildet, so dass sich jeweils zwei aufeinander zu laufende Sackbohrungen 154 in einem Durchdringungsbereich DX1a schneiden. Mit anderen Worten ist die Hälfte der Sackbohrungen 154 als Sackbohrungen 154a in einem Winkel +α und die andere Hälfte der Sackbohrungen 154b gegensinnig dazu ausgerichtet, nämlich in einem Winkel -α gegenüber der Längsachse LX. Dabei sind die jeweils zusammenwirkenden, in einem Winkel +α und in einem Winkel -α sich schneidenden Sackbohrungen in Längsrichtung LX versetzt liegend über Bohrungsöffnungen 154'a und 154'b an der unteren Schmalseite 152' in die Führungsschiene 15 eingebracht, und zwar derart, dass sich die jeweils in einem gegensinnigen Winkel aufeinander zu laufenden Sackbohrungen an ihrem zu der Unterkante 152 oder zur unteren Schmalseite 152' entfernt liegenden Ende in dem erwähnten Durchdringungsbereich DX1a durchdringen und schneiden. Der Durchmesser der Querbohrung kann beispielsweise zwischen 40% und 80% der Dicke der Führungsschienen 15 liegen. Weisen die Führungsschienen beispielsweise eine Dicke von 10 mm auf, kann der Durchmesser der Querbohrung beispielsweise 7 mm betragen.

Dadurch werden näherungsweise jeweils V-förmig ausgerichtete Querbohrungen gebildet.

Wie aus den Figuren 3 und 4 auch zu ersehen ist, wird jeweils ein nächstes Paar miteinander V-förmig verbundener Querbohrungen 154a und 154b so in Längsrichtung LX der Führungsschiene 15 versetzt eingebracht, dass sich zwei gegensinnig geneigte Querbohrungen 154a und 154b benachbart zu den Bohrlöchern 154'a und 154'b an der Unterseite oder Unterkante 152, also einer der beiden Schmalseiten 152' der Führungsschiene 15 in einen zweiten Durchdringungsbereich DX1b schneiden, also näher liegend zu der Schmalseite 152', an der die Bohrlöcher 154'a und 154'b liegen.

Wie insbesondere aus Figur 4 zu ersehen ist, werden die Bohrungslöcher 154'a und 154'b (d.h. die jeweiligen Gewinde) der jeweiligen Bohrungen 154 anschließend wiederum verschlossen, beispielsweise durch Propfen oder durch eingeklebte Gewindestifte 257. Dadurch entsteht dann eine zick-zack-förmige Kühlkanaleinrichtung KA mit einem Kühlkanal K1, der in Längsrichtung durch die Führungsschiene hindurch verlaufend ausgebildet ist.

Im gezeigten Ausführungsbeispiel nach den Figuren 3 und 4 ist der so gebildete Kühlkanal K1 zu einer senkrecht zu den Lauf- und/oder Gleitflächen 15a, 15b und damit senkrecht zu den Breitseiten 15'a, 15'b der Führungsschiene 15 (und damit senkrecht zur Zeichenebene) verlaufenden mittigen Orthogonalebene OE asymmetrisch ausgerichtet, da die Gleitwirkung vor allem schwerpunktmäßig eher in der unteren Hälfte der Führungsschiene auftritt, also hier vor allem die Kluppen oder allgemein die Transporteinheit KK bzw. KT längs verfahrbar geführt sind. Denn die in den Figuren 2 und 3 gezeigte Führungsschiene ist in ihrem oberen Bereich, also im Bereich ihrer Oberkante 151 in einer Trageinrichtung eingebaut und gehalten, wozu die Führungsschiene mit dem in Figur 3 dargestellten Durchbrüchen 153 (Befestigungsbohrungen 153) versehen ist, die die Führungsschiene in Querrichtung durchsetzen.

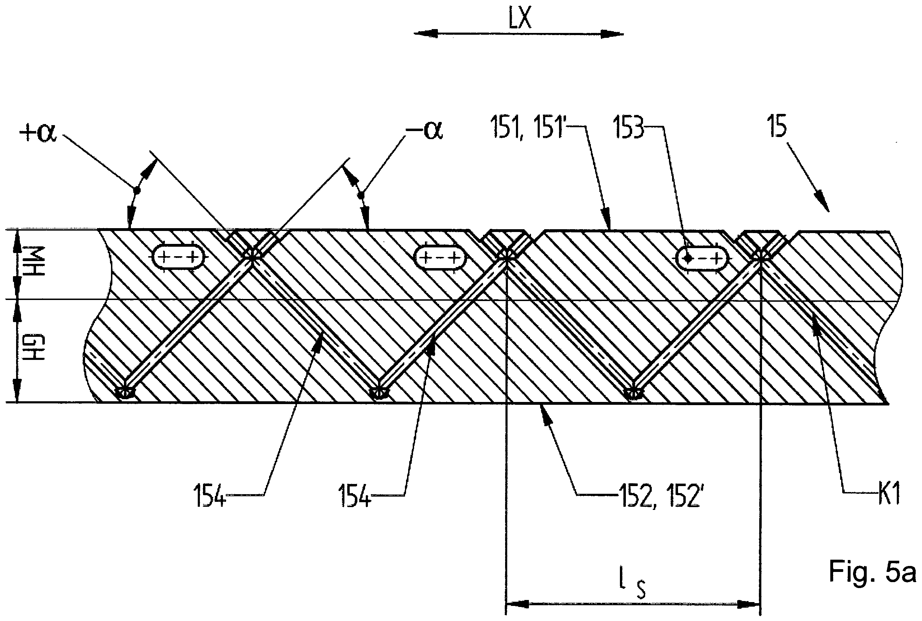

Anhand von Figur 5a ist lediglich in einer auszugsweisen schematischen Längsschnittdarstellung dargestellt, dass die jeweils in einem positiven und einem negativen Winkel α in die Führungsschiene 15 eingebrachten Bohrlöcher 154 auch von der gegenüberliegenden Seite aus, nämlich beispielsweise von der oberen Schmalseite 151' oder Oberkante 151 aus alternativ zu dem vorher genannten Ausführungsbeispiel eingebracht werden können. Diese Bohrlöcher sind bis zur gegenüberliegenden Schmalseite 152, also zur Unterkante 152 geführt, wo sie sich wiederum durchdringen. Der Eintritt der Bohrlöcher 154 muss auch hier wiederum anschließend geschlossen werden, so dass sich auch in diesem Ausführungsbeispiel ein zick-zack-förmiger Kühlkanal K1 ergibt.

Nur der Vollständigkeit halber wird ergänzend zu dem Ausführungsbeispiel gemäß Figur 4 erwähnt, dass die Querbohrungen 154 auch so von einer Schmalseite aus eingebracht werden können, dass diese Querbohrungen an der gegenüberliegenden Schmalseite austreten. Auch in diesem Falle müssen sich natürlich die jeweils in einem abwechselnden Winkel +α, -α geneigt ausgerichteten Querbohrungen durchdringen, um einen fortlaufenden Kühlkanal K1 zu erzielen. Eine derartige Umsetzung hat aber den Nachteil, dass dann die entsprechenden Bohrungen auf beiden gegenüberliegenden Schmalseiten der Führungsschiene 15 anschließend auch verschlossen werden müssen. Von daher wird ein Konzept bevorzugt, bei dem die Bohrung immer nur als Sackbohrung von einer Längs- oder Schmalseite aus, also einer Ober- oder Unterkante 151, 152 in die Führungsschiene 15 eingebracht werden.

Ferner wird angemerkt, dass die gegensinnig geneigten Winkel +α und -α auch unterschiedlich groß gewählt werden könnten. Es kann nämlich daran gedacht werden, die eine Querbohrung in einem Winkel +α und die gegensinnige Querbohrung beispielsweise in einem Winkel -β einzubringen, wobei der Winkel α und der Winkel β unterschiedlich groß sind. Allerdings bringt dies keine technischen Vorteile.

Das Ausführungsbeispiel gemäß Figur 4 weist gegenüber demjenigen nach Figur 5a jedoch den Vorteil auf, dass bei dem Ausführungsbeispiel gemäß Figur 4 der gekühlte Bereich der Führungsschiene 15 nur in einem Gleithöhen-Abschnitt GH liegt, in welchem auch die Transporteinrichtung mittels Gleitelementen geführt und gekühlt werden muss. Der verbleibende oder obere Montagehöhen-Abschnitt MH dient beispielsweise lediglich zur Befestigung der Führungsschiene 15 an einer Trägereinrichtung 11, weshalb dort an der Führungsschiene beispielsweise in Längsabständen versetzt liegend Langlöcher oder Bohrungen 153 oder sonstige Befestigungen zur Montage der Führungsschiene ausgebildet sein können.

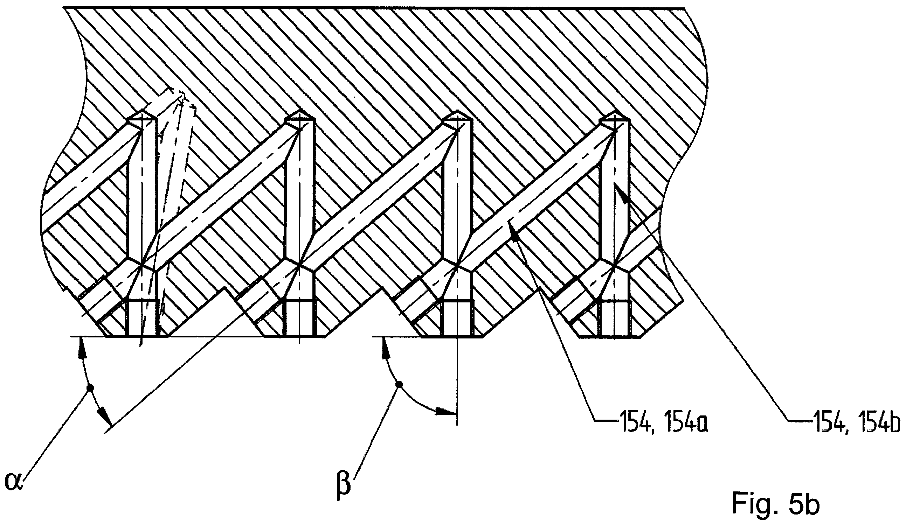

Anhand von Figur 5b ist nur schematisch in Abweichung zu Figur 4 gezeigt, dass beispielsweise ein zick-zackförmiger Kanal K1 mit Querbohrungen 154a, 154b ausgebildet sein kann, bei denen beispielsweise jeweils eine zweite Querbohrung 154b senkrecht zu einer Ober- oder Unterkante 151, 152 und damit zur Längsrichtung LX der Führungsschiene 15 verläuft. In diesem Falle würde der eine Winkel +α einen Wert vorzugsweise zwischen 25° und 65° aufweisen, möglicherweise um 45°, wohingegen der zweite Winkel α' bezüglich der zweiten Querbohrung 154b 90° beträgt. Es wird ferner angemerkt, dass in dem Ausführungsbeispiel gemäß Figur 5b sogar der zweite Winkel α' größer als 90° sein könnte, mit der Folge, dass die Querbohrung 154b (wie durch die strichlierte Darstellung für die Querbohrung 154'b wiedergegeben) ebenfalls in gleicher Richtung geneigt sein könnte wie der Neigungswinkel α für die jeweils weitere Querbohrung 154a. Allerdings ist dies nicht wünschenswert, da die Gesamtbohrlänge bei diesem Ausführungsbeispiel unnötig vergrößert wird.

Von daher wird angemerkt, dass allgemein zwei aufeinander folgende Querbohrungen 154a, 154b und/oder 154c, 154d nur unterschiedliche Neigungswinkel zur Längsrichtung LX der Führungsschiene oder zu einer oberen oder unteren Schmalseite 151', 152" aufweisen. Dadurch wird stets ermöglicht, dass jeweils zwei aufeinander folgende Querbohrungen in einem gemeinsamen Durchdrängungsbereich enden, um hierüber einen fortlaufenden Kühlkanal innerhalb der Führungsschiene zu bilden.

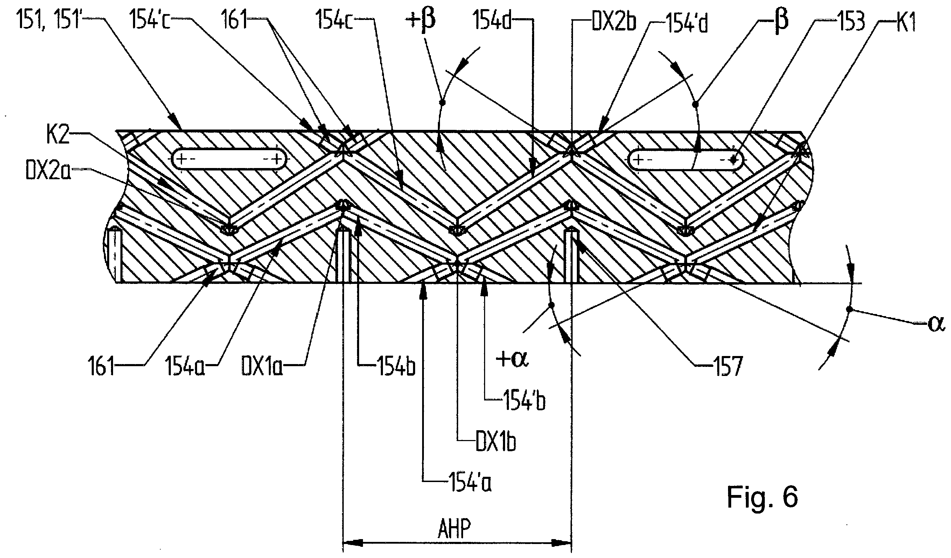

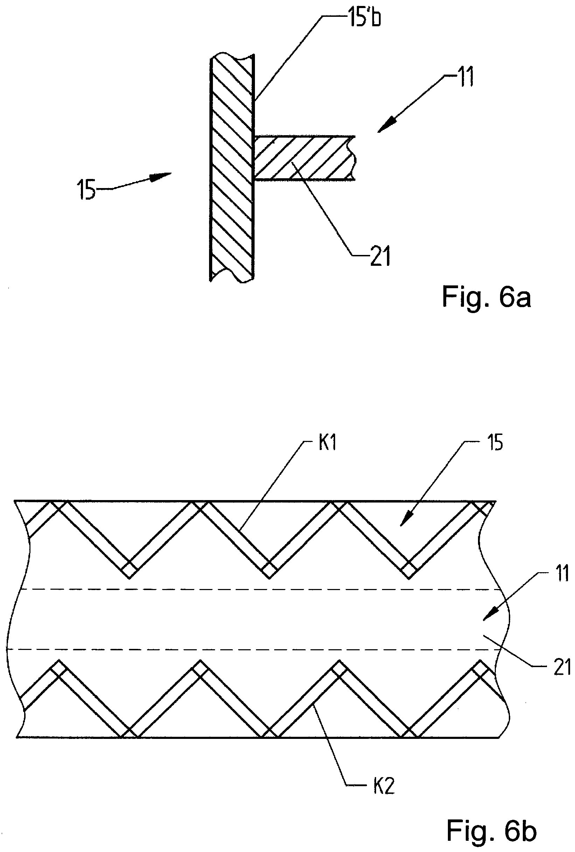

Anhand von Figur 6 ist eine weitere Abwandlung insoweit gezeigt, als hier beispielsweise zwei Kühlkanäle K1 und K2 nebeneinander liegend in Längsrichtung LX der Führungsschiene verlaufen.

Diese Bohrlöcher 154c und 154d, die von Bohrlochöffnungen 154'c bzw. 154'd aus von der Oberkante 151 oder der oberen Schmalseite 151' aus in die Führungsschiene 15 eingebracht sind, verlaufen so weit in die Führungsschiene hinein, dass sich deren innere Durchdringungszone DX2a beispielsweise näher zur gegenüberliegenden Unterkante 152 (untere Schmalseite 152') befindet als die gegenüberliegende Oberkante 151, von der aus die Bohrlöcher 154'c bzw. 154'd in die Führungsschiene eingebracht sind. Die Bohrlöcher 154'c, 154'd (also die Öffnungen der Querbohrungen 154c, 154d) müssen auch hier wiederum anschließend beispielsweise durch eingeklebte Bolzen oder Verschlussschrauben 161 geschlossen werden.

Das Ausführungsbeispiel gemäß Figur 6 verdeutlicht also, dass ein erster Kühlkanal K1, ähnlich wie anhand von Figur 4 beschrieben, von der unteren Schmalseite 152' aus in die Führungsschiene 15 eingebracht sein kann, und dass daneben ein zweiter Kühlkanal K2 mit entsprechend geneigt verlaufenden Querbohrungen 154c und 154d von der gegenüberliegenden, d.h. im gezeigten Ausführungsbeispiel oberen Schmalseite 151' aus eingebracht werden kann. Die Bohröffnungen müssen in beiden Fällen anschließend wieder verschlossen werden. Die Ausrichtung der einzelnen Kanäle K1 und K2 kann dabei in leicht unterschiedlichen Winkeln vorgenommen sein, wie aus Figur 6 zu ersehen ist. Denn beim unteren Kühlsystem K1 sind die Querbohrungen 154a, 154b in einem Winkel +α und -α geneigt ausgerichtet, wohingegen die Querbohrungen 154c, 154d in dem oberen Kühlsystem mit dem Kühlkanal K2 in einem Winkel +β und -β ausgerichtet sind, der größer ist als der Winkel α. Von daher wird der minimale Abstand zwischen dem unteren und oberen Kühlsystem K1 und K2 dort erreicht, wo der innere oder erste Durchdringungsbereich DX2a des zweiten Kühlkanals K2 endet. Denn in unmittelbarer Nähe dazu liegt zur unteren Führungskante 152 versetzt liegend der äußere oder zweite Durchdringungsbereich DX1b des ersten Kühlkanals K1, also jener Durchdringungsbereich, der unmittelbar benachbart zu den Bohröffnungen 154'a und 154'b liegt. Der größte Abstand zwischen den beiden Kühlkanälen K1 und K2 befindet sich dann in dem jeweiligen Abschnitt der Führungsschiene 15, bei dem sich der innere oder erste Durchdringungsbereich DX1a des ersten Kühlkanals K1 am nächsten zur gegenüberliegenden Schmalseite 151' befindet, also in jenem Bereich, in dem unmittelbar benachbart der äußere oder zweite Durchdringungsbereich DX2b des zweiten Kühlkanals K2 ausgebildet ist.

Anhand von Figur 6a ist im Querschnitt nur schematisch angedeutet, dass die Führungsschiene 15 nicht nur zwingend an einem Randbereich, beispielsweise an dem benachbart zur oberen Schmalseite 151' liegenden Montagebereich an einer Tragstruktur mit einem entsprechend geeigneten Träger gehalten und verankert sein muss, sondern dass die Führungsschiene 15 auch mittig oder zur Mitte der Schiene 15 näher liegend an einer Tragstruktur bzw. an einem Trägeraufbau 11, beispielsweise mit einem mittig an der Längs- oder Breitseite 15'b der Führungsschiene 15 montiert sein kann, wobei dann die entsprechenden Befestigungsbohrungen 153 in der Führungsschiene 15 mittig oder eher mittig, bezogen auf die jeweilige Längs- oder Breitseite 15'b (oder 15'a) vorgesehen sind.

In diesem Falle können - wie schematisch anhand der Seitenansicht in Figur 6b wiedergegeben ist - zwei Kühlkanäle K1 und K2 vorgesehen sein, nämlich oberhalb und unterhalb der horizontalen Trägerstruktur 11, beispielsweise mit dem erwähnten Querträger 21. Dabei könnte abweichend von Figur 6b nicht nur ein oben- und untenliegender Führungskanal K1, K2 vorgesehen sein, sondern auch ein einkanaliges System, welches sich mehr oder weniger über die gesamte Höhe der Führungsschiene 15 erstreckt, wie dies beispielsweise in Figur 5a bereits gezeigt ist. Auch in diesem Falle könnte eine Trägerstruktur 11 mittig oder eher mittig angebracht sein, wie dies anhand von Figur 6a dargestellt ist.

Auch bei diesem Ausführungsbeispiel sind die Querbohrungen so eingebracht, dass sie nicht die Montageöffnungen 153 für die Führungsschiene 15 schneiden.

Die Ausführungsbeispiele zeigen also, dass die Kühlkanäle K1, K2 unterschiedlich ausgeführt werden können. Sie können von der unteren Schmalseite 152' wie aber auch von der oberen Schmalseite 151' aus in die Führungsschiene eingebracht werden, und zwar einreihig oder, wie anhand von Figur 6 gezeigt ist, auch zweireihig, nämlich einmal von der oberen wie von der unteren Schmalseite aus. Insbesondere bei der Ausführungsvariante gemäß Figur 6 mit der zweireihigen Ausbildung können sehr große Wärmemengen abtransportiert werden. Bei diesem Ausführungsbeispiel werden also über die Längsrichtung LX der Führungsschiene 15 hinweg im Inneren der Führungsschiene zwei zick-zack-förmig nebeneinander verlaufende Kühlkanäle K1, K2 gebildet.

Nur der Vollständigkeit halber soll auch erwähnt werden, dass beispielsweise bei der Ausführungsform gemäß Figur 6 die Kühlkanäle K1 und K2 nicht zwingend getrennt ausgebildet sein müssen, sondern dass die Querbohrungen 154 so lang ausgestaltet sein können, dass sich auch ein Durchdringungs- und damit Knotenpunkt ergibt, in welchem sich die Querbohrungen des ersten Kühlkanals K1 mit den Querbohrungen des zweiten Kühlkanals K2 durchdringen, so dass beide Kühlkanäle K1 und K2 zu einem gemeinsamen Kühlsystem miteinander verbunden sind.

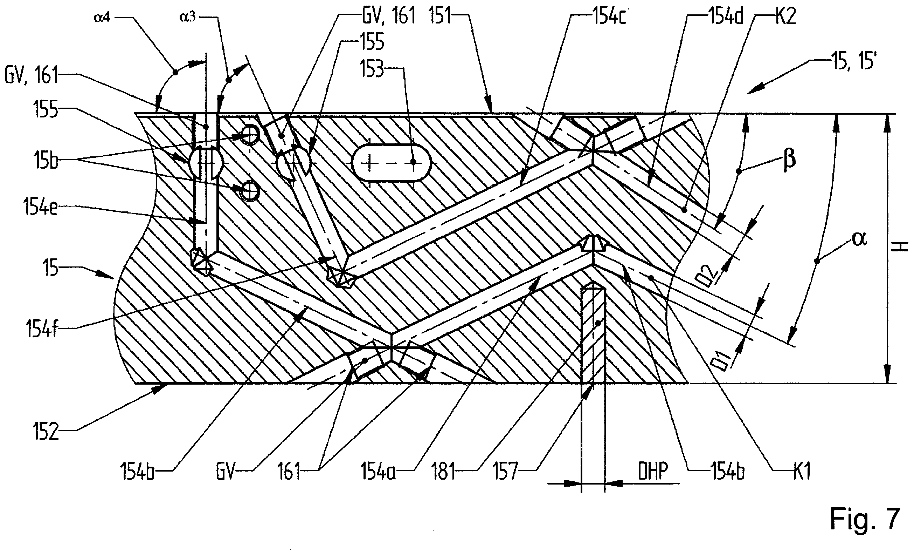

Nachfolgend wird auf die schematische Mittellängsschnittdarstellung durch ein Endstück der Führungsschiene 15 Bezug genommen, wie dies anhand von Figur 7 dargestellt ist.

Figur 7 zeigt dabei einen Ausschnitt eines Endstücks 15' der Führungsschiene 15, wie es am Anfang wie am Ende der Führungsschiene ausgebildet ist oder sein kann.

Dabei ist anhand von Figur 7 ausschnittsweise ein Endstück 15' für eine Führungsschiene 15 mit einem zweireihigen Kühlsystem gezeigt, wie dies grundsätzlich anhand von Figur 6 erläutert worden ist. Sollte die Führungsschiene nur einreihig ausgebildet sein, würde eine entsprechende Umsetzung eben nur für einen Kühlkanal (K1 oder beispielsweise K2) am Ende der Führungsschiene in analoger Weise erfolgen, um nur diesen einen Kühlkanal mit Kühlflüssigkeit zu versorgen.

In Figur 7 ist die Führungsschiene 15, d.h. die Führungs-leiste mit ihrer Höhe H mit ihren benachbart zur oberen Schmalseite 151' oder Oberkante 151 ausgebildeten Monta-geöffnungen 153 gezeigt, worüber die Führungsleiste 15 mit der Tragstruktur 11 bzw. der Gelenkkonstruktion bei-spielsweise einer Reckanlage mechanisch verbunden werden kann. Die Verschraubung mit der Tragstruktur 11 erfolgt über die in Figur 7 gezeigten Montageöffnungen 153, die hier als Langlöcher 153 ausgebildet sind. Die untere Schmalseite 152' oder Unterkante 152 der Führungsschiene 15 dient z.B. der Aufnahme einer Kluppen-Kettenkonstruk-tion bzw. einer Transporteinheit. Es wird insoweit z.B. auf eine Vielzahl vorbekannter Reckanlagen verwiesen, bei denen die Kluppen an entsprechend geformten Füh-rungsschienen bzw. Führungsleisten 15 verfahrbar gela-gert sind.

Die im gezeigten Ausführungsbeispiel quer zur Längserstreckung LX der Führungsschiene 15 verlaufenden Querbohrungen 154a bis 154d mit einem Durchmesser D werden unter bestimmten geeigneten Winkeln +α, +β gegenüber der Länge LF der Führungsschiene 15 eingebracht. Dabei sind unterschiedliche Durchmesser, Neigungswinkel und eine unterschiedliche Anzahl von Querbohrungsreihen möglich. Die Querbohrungen 154 werden an ihren jeweiligen offenen Enden mit den bereits erwähnten eingeklebten Verschlussschrauben 161 innerhalb von Gewindebohrungen GV verschlossen.

Die dem jeweiligen Ende der Führungsschiene 15 am nächsten kommende Querbohrung 154 ist dann noch mit einer speziellen Verbindungsbohrungen verbunden. So ist beispielsweise die Querbohrung 154b des ersten Kühlkanals K1 mit der Verbindungsbohrung 154e verbunden. Die Querbohrung 154c des zweiten Kühlkanals K2 ist dann am Ende der Führungsschiene 15 mit der Verbindungsbohrung 154f verbunden. Diese Verbindungsbohrungen 154e und 154f können mit stärkerer Quererstreckung als die anderen Querbohrungen 154 in die Führungsschiene 15 eingebracht sein. Im gezeigten Ausführungsbeispiel ist die Verbindungsbohrung 154e mit einem Winkel α4 senkrecht zur Oberkante 151 verlaufend und damit senkrecht zur oberen Schmalseite 151' der Führungsschiene 15 (und damit senkrecht zur Längserstreckung LX) eingebracht. Die zweite Verbindungsbohrung 154f des zweiten Kühlkanals K2 ist beispielsweise in einem Winkel α3 gegenüber der Längserstreckung LX und damit der oberen Schmalseite 151' eingebracht, wobei dieser Winkel α3 kleiner als 90%, aber größer als die anderen Winkel α bzw. β bezüglich der Winkelneigung der Querbohrungen 154 ist.

Beide Verbindungsbohrungen 154e und 154f sind ebenfalls wiederum durch Verschlussschrauben 161 dicht verschlossen. Dabei wird ferner noch angemerkt, dass beide Kühlkanäle K1 und K2 über ihre zugeordneten Verbindungsbohrungen 154e, 154f an der gleichen Längskante oder Schmalseite der Führungsschiene enden, hier bevorzugt an der oberen Kante 151, d.h. der oberen Schmalseite 151', an der auch die Montageseite der Führungsschiene 15 ausgebildet ist.

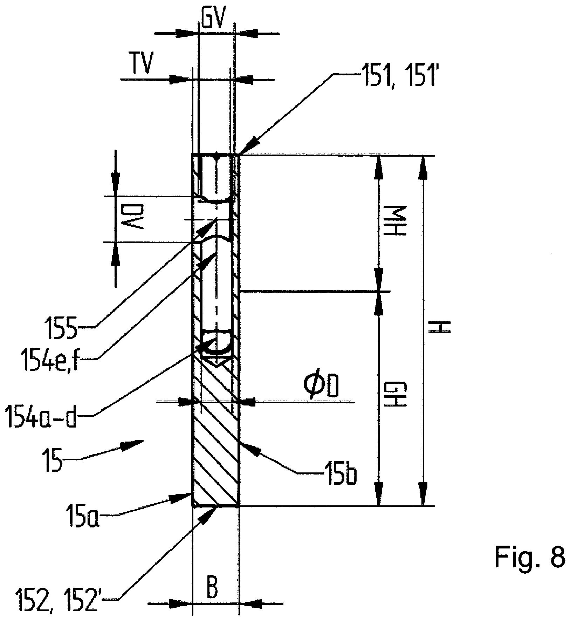

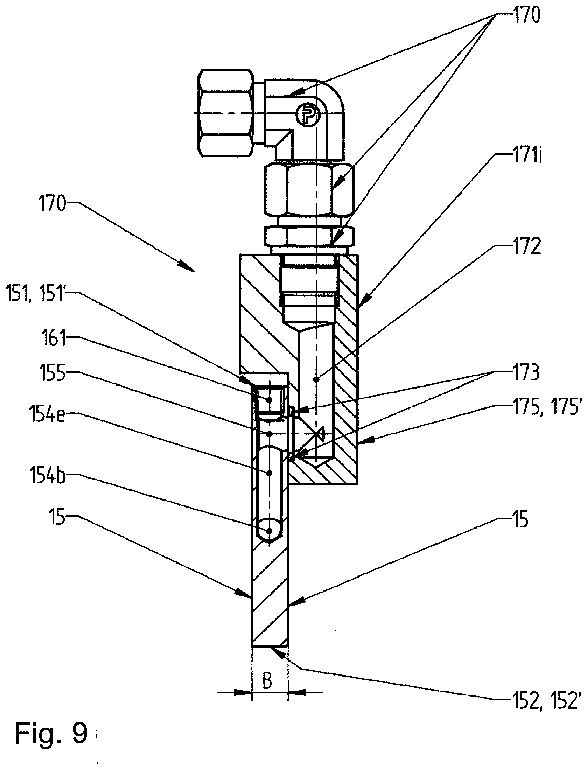

An den Enden bevorzugt kurz vor den Verschlussschrauben 161 in den Verbindungsbohrungen 154e und 154f oder an einer entsprechenden Teillänge der Führungsleisten 15 befinden sich dann zusätzlich Ein- bzw. Ausgangsbohrungen 155 mit einem Durchmesser DV (Figur 8), die in Dickenrichtung der Führungsleiste 15 verlaufen, also quer bzw. senkrecht zu den beiden, die Lauf- und/oder Gleitfläche bildenden Außenflächen 15a, 15b der Führungsschiene 15. Bevorzugt sind diese Ausgangsbohrungen 155 senkrecht zu der jeweiligen Außenfläche 15a bzw. 15b der Führungsschiene 15 eingebracht, und zwar im gezeigten Ausführungsbeispiel in Höhe des Montagebereichs MH. Die erwähnten Ausgangsbohrungen 155 verlaufen dabei jedoch nur von einer Seite, also von einer der beiden Außenflächen 15a oder 15b bis zum Durchmesser der Querbohrungen 154, wie dies anhand von Figur 8 gezeigt ist. Auf diese Bohrungen 155 wird dann ein Verteilerkopf 170 abgedichtet aufgesetzt (Figur 9), der die Zu- bzw. Ableitung des Kühlmediums und/oder die Verbindung zwischen zwei Führungsleisten sicherstellt. Im Falle einer Verbindung zu einer nächsten Führungsleiste kann über den erwähnten Verteilerkopf 170 Kühlmedium austreten und über eine Schlauchverbindung einem angrenzenden nächsten Endstück einer nachfolgenden Führungsschiene zugeführt werden. Ansonsten kann je nach Bedarf einer Führungsschiene neues Kühlwasser zugeführt und am Ende das erwärmte fließfähige Kühlmedium zur Wiederaufbereitung an eine Kühlanlage weitergeleitet werden. Die Befestigung eines Verteilerkopfes erfolgt über ein Gewinde 156.

Die oben erwähnten Verbindungsbohrungen 154e und 154f können beispielsweise senkrecht (α4) oder unter einem Winkel α3 auf die Querbohrungen treffen, wobei der Winkel α3 und der Winkel α4 zwischen der Erstreckungsrichtung der jeweiligen Verbindungsbohrung 154e bzw. 154f gegenüber der Längserstreckungsrichtung LX und damit gegenüber der Ober- oder Unterkante 151 oder 152 ist, also jener Schmalseite 151 oder 152, an der die betreffende Verbindungsbohrung austritt, die ebenfalls durch eingeklebte Gewindestifte 161 an der jeweiligen Schmalseite verschlossen wird.

Zur Vergleichmäßigung der Wärmeverteilung und damit zur Vergleichmäßigung der Kühlung können Zusatzbohrungen 157 in die Führungsschiene 15 und/oder in den Führungsschienen-Enden 15' eingebracht sein, und zwar mit einem Durchmesser DHP, wie dies beispielhaft für das Führungsschienen-Ende 15' anhand von Figur 7 gezeigt ist. Diese in das Material der Führungsschiene 15 eingebrachten Zusatzbohrungen 157 verlaufen quer und vorzugsweise senkrecht zur jeweiligen Ober- oder Unterkante 151, 152, also senkrecht zu der Fläche der oberen oder unteren Schmalseite 151', 152' der Führungsschiene 15. Ferner sind diese Zusatzbohrungen 157 über die gesamte Länge der Führungsschiene in Abständen an Positionen eingebracht, in welcher jeweils zwei schräg aufeinander zulaufende Querbohrungen 154 eines Kühlkanals K1 oder K2 den zur benachbarten Ober- oder Unterkante 151, 152 entfernt liegenden Durchdringungsbereich DX1a (oder DX2a) aufweisen. Mit anderen Worten ist hier jeweils ein größerer Materialabschnitt der Führungsschiene vorgesehen, der bis zur zugehörigen Ober- oder Unterkante nicht von einem Kühlkanalabschnitt durchsetzt ist. Hier sind also die erwähnten, quer zur Längsrichtung der Führungsschiene eingebrachten sacklochförmigen Zusatzbohrungen 153 vorgesehen, die in einem gegebenenfalls geringen Abstand vor den Querbohrungen enden oder auch auf sie treffen. In diese Bohrungen werden dann gut wärmeleitende Medien, wie beispielsweise Kupferbolzen 181 oder sogenannte Heat Pipes 182 abgedichtet eingebracht, die über die Begrenzungskante 151 oder 152 nach außen hin überstehen. Gerade durch die abgedichteten Einfügungen können die erwähnten Zusatzbohrungen 157 auf die Querbohrungen 154 treffen, wodurch dann kein Kühlmittel nach außen austreten kann.

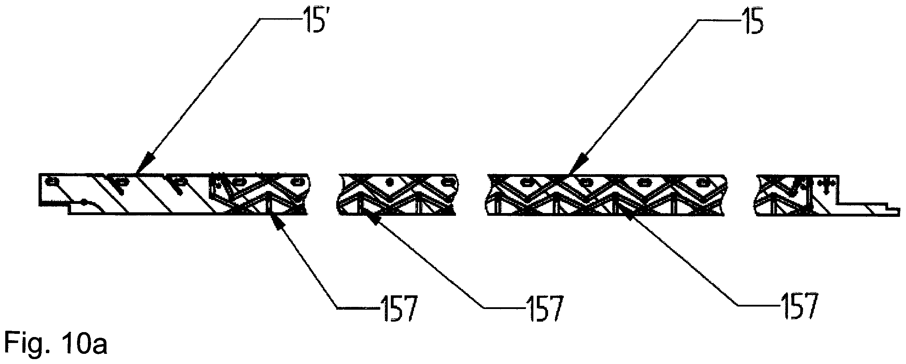

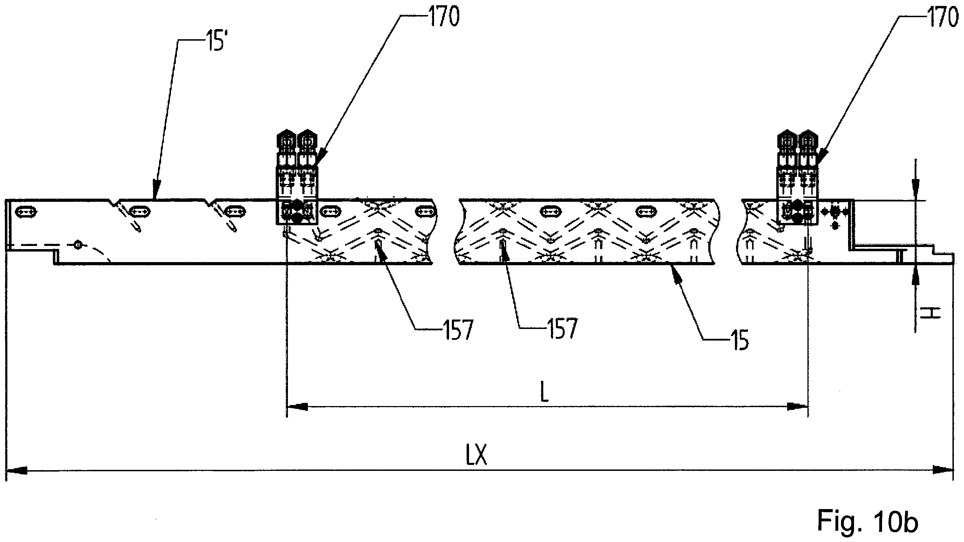

Eine entsprechende Führungsschiene 15 ist in einer Längsschnittdarstellung parallel zu den Seiten- oder Gleitflächen 15a, 15b in Figur 10a und in einer entsprechenden Seitenansicht in Figur 10b wiedergegeben (wobei in Figur 10b die Kühlkanäle K1, K2 und die Zusatzbohrungen nur strichliert angedeutet sind), und zwar in ihrer gesamten Baulänge BL, wobei ferner die wirksam gekühlte Länge L eingezeichnet ist, die also jenem Längenabschnitt zwischen den beiden Verteilerköpfen 170 der Führungsschiene 15 entspricht, in dem das vorzugsweise aus Kühlwasser bestehende Kühlmedium die Führungsschiene durchströmt.

Nachfolgend wird nochmals unter Bezugnahme auf die Figuren 8 und 9 die Verbindung der Kühlkanäle der einzelnen Seitenführungselemente erläutert.

In Figur 9 ist in Vertikalschnittdarstellung senkrecht zur Längsrichtung oder Längsachse LX einer Führungsschiene 15 im Bereich des Führungsschienen-Endes 15' mit den notwendigen zusätzlichen Anbauteilen wiedergegeben.

Wie erwähnt, sind an den Führungsschienen 15 im Einlauf- oder Auslaufbereich des Kühlmittels Querbohrungen oder, wie bevorzugt anhand von Figur 10a und Figur 10b gezeigt, abschließende Verbindungsbohrungen 154e und 154f vorgesehen, die mit senkrecht zu den Außen- oder Gleitflächen eingebrachten Verbindungsbohrungen 155 zu einem durchgängigen Kühlkanal verbunden sind. Über diese seitlichen Verbindungsbohrungen 155 kann das Kühlmittel einströmen bzw. ausströmen. Über eine Verbindungseinheit 170 (Verteilerkopf 170) kann der jeweilige Kühlkanal K1 und/oder K2 an eine ihm zugeordnete Verrohrung angeschlossen werden (siehe Figur 9). Die Verbindung besteht bevorzugt aus einem Flanschklotz 171 mit einer in diesem Fall vertikal verlaufenden Anschlussbohrung 172 und Verschraubungsteilen 174. Der erwähnte Flanschklotz 177 ist über eine Verschraubung 175 an der Führungsschiene verschraubt, wozu entsprechende Schrauben 175' in entsprechende Bohrungen 156 (Figur 7) am Führungsschienen-Ende 15' eingreifen bzw. eingedreht sind oder über auf der Gegenseite der Führungsschiene 15 sitzende Muttern gesichert sind. Die Abdichtung der beiden Einheiten erfolgt z.B. über eine temperaturfeste Dichtung 173.

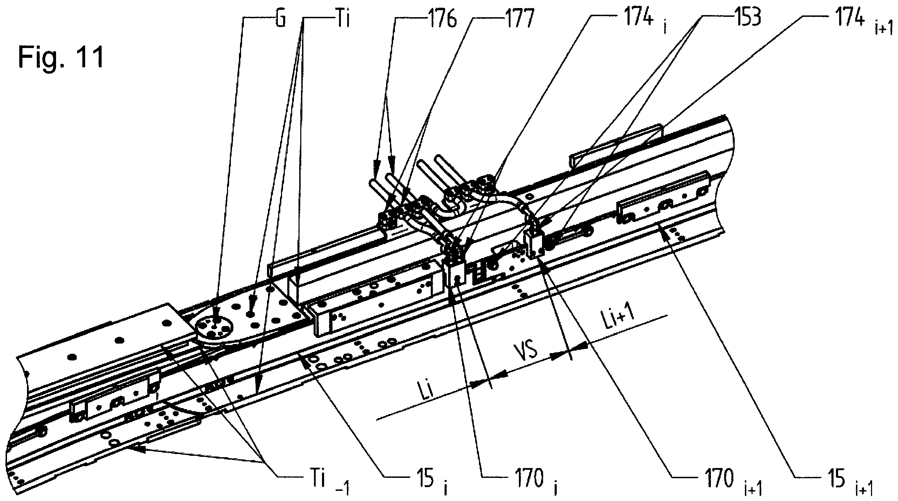

Fertigungsbedingt setzen sich die Seitenführungen aus mehreren Führungsleisten 15ᵢ mit i=1..-N zusammen. Sie werden auf der Kühllänge Li gekühlt und mit den Trägern Ti über Verschraubungen 153 verbunden. Gerade Streckenabschnitte des Umlaufweges müssen gar nicht oder nur in Teillängen gekühlt werden. Figur 11 zeigt die Situation an einem Gelenk G, welches die Trägerteilstücke Ti-1 und Ti miteinander verbindet.

Zwischen den gekühlten Längen Li und Li+1 ist ein Verschraubungs- und Schiebestück VS vorhanden, das hier ungekühlt dargestellt wurde. Es ist aber auch in diesem Teilstück eine Kühlung konstruktiv möglich.

Gezeigt wird die Verbindungsmechanik der Zu- und Ableitungen 170i mit den Flanschklötzen 171i und den jeweiligen Verschraubungen 174 mit Zuleitungen 176, die wiederum in den Halteflanschen 176 gelagert sind. Die Rohre bzw. Schläuche stellen dann die Verbindung mit den Kühlaggregaten her, oder verbinden die Führungsleisten 15i miteinander.

Nachfolgend wird auf die Kühlung eingegangen, wie sie im Bereich eines Gelenkes G im Rahmen der Erfindung eingesetzt werden kann.

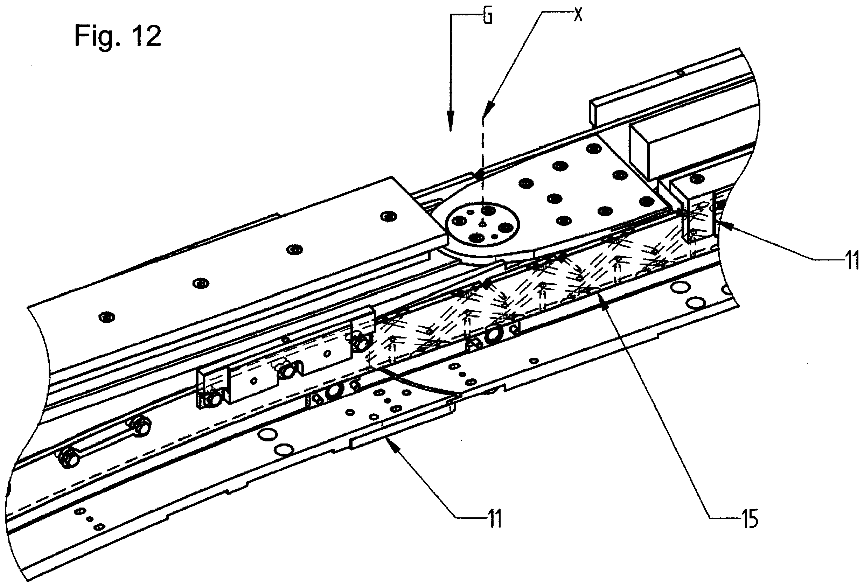

Mit der beschriebenen Lösung kann über den gesamten Umlauf einer umlaufend geschlossenen Transportbahn eine Kühlung an einer Führungseinrichtung oder einer Führungsschiene realisiert werden. Dabei können auch die verstellbaren Gelenke mitgekühlt werden, da sich die Gleitleiste, also die Führungsschiene 15 genauso elastisch verformen lässt wie eine ungebohrte Führungsschiene. Dazu wird nachfolgend auf Figur 12 Bezug genommen.

Die Besonderheit bei diesem Ausführungsbeispiel ist, dass für die gesamte Schienen- und Tragkonstruktion 11 eine Gelenkanordnung G vorgesehen ist, worüber zwei Schienenabschnitte in unterschiedlicher Winkellage eingestellt werden können. Die Gelenkanordnung umfasst ein oberes und ein dazu versetzt liegendes unteres Gelenk G, die in Draufsicht axial zueinander angeordnet sind und dadurch eine Verschwenkung eines vorlaufenden Schienenabschnittes zu einem nachlaufenden Schienenabschnitt um die Gelenkachse X erlaubt (Figur 12).

Zwischen dem oberen und unteren Tragabschnitt ist dann die bisher erläuterte Führungsschiene 15 gezeigt, die mit ihren großen, in Vertikalrichtung ausgerichteten Längs- oder Außenseiten 15a und 15b (also die sogenannten Breitseiten) parallel zur Verschwenkachse X ausgerichtet ist. Werden nunmehr die Schienen- und damit die Tragabschnitte um die Verschwenkachse X in einem bestimmten Winkelbereich unterschiedlich eingestellt, wird die dazwischen verlaufende Führungsschiene 15 entsprechend kontinuierlich gebogen, und zwar einschließlich der in ihr befindlichen Kühlkanäle K1 und/oder K2.

Zusammenfassend kann insoweit festgehalten werden, dass die erläuterten Querbohrungen 154 in ihren Winkeln α bzw. β so ausgeführt sind, dass die zu kühlende Fläche an einer Führungsschiene optimal abgedeckt ist und keine zu großen Strömungsverluste auftreten. Mit anderen Worten sollen also vor allem jene Abschnitte der Außenflächen 15a und 15b der Führungsschiene 15 gekühlt werden, an denen aufgrund einer Gleit- oder Rollreibung einer zu führenden Transporteinheit (Kluppe) Wärme entsteht. In den örtlich am weitesten entfernten Stellen von den Kühlbohrungen entsteht dabei die größte Temperatur, d.h. jeweils in dem mittleren Abschnitt zwischen zwei winklig aufeinander zulaufenden Querbohrungen, d.h. in dem mittleren Abschnitt der grundsätzlich V-förmigen oder V-ähnlichen aufeinander zulaufenden Querbohrungen. Die Überschneidung und die Winkel der Querbohrungen sind so optimiert, dass diese weit entfernten Stellen möglichst nahe an den Kühlbohrungen sitzen, wodurch kein niedriger Temperaturunterschied erreicht wird. Somit wird die Temperatur der gesamten Schiene relativ gut homogenisiert, d.h. die minimale Temperatur und maximale Temperatur zeigen eine geringe Differenz. Die Überschneidungen der Bohrungen sind auch strömungstechnisch optimiert, um die Druckverluste möglichst gering zu halten.

Um die Temperatur im Gleitbereich der Führungsschiene zu homogenisieren, werden wie erwähnt sehr gute Wärmeleiter beispielsweise in Form von Heat Pipes 182 im Gleitbereich der Führungsschiene 15 eingesetzt. Diese transportieren die Wärme von der Heißstelle weg in den Nahbereich der Kühlbohrungen. Als Wärmeleiter-Bolzen 181 können Bolzen aus klassischen Materialien wie Kupfer, Bronze, Silberlegierungen usw. dienen. Ein extrem guter Wärmeabtransport wird mit Heat Pipes erreicht, die eine extrem hohe Wärmeleitfähigkeit besitzen. Die Wärmeträger werden über eine enge Passung in die Führungsschiene 15 eingebracht und gegen ein Herausfallen gesichert.

### D: Abgewandelte Führungsschiene mit einem flexiblen Rohr innerhalb zweier oder mehrerer Halbschalen:

Nachfolgend wird auf ein abgewandeltes Lösungsprinzip für eine gekühlte Führungsschiene 15 eingegangen.

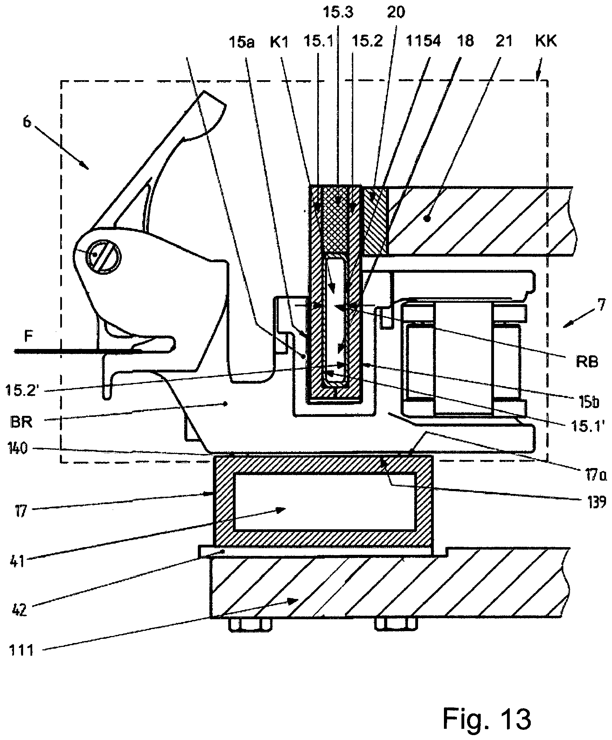

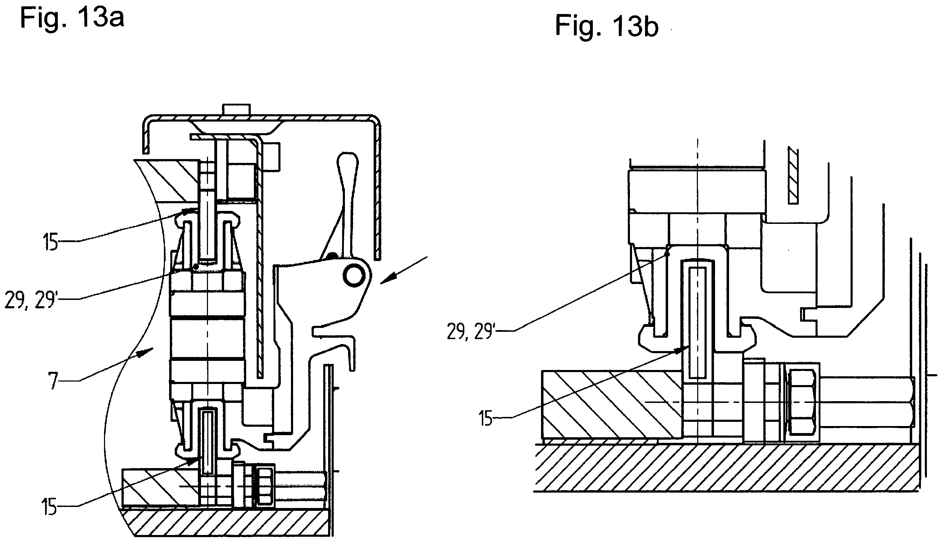

Dabei wird auf die Darstellung gemäß Figur 13 verwiesen, in der ein Querschnitt durch ein Transportsystem (Reckanlage oder Querreckanlage) mit einer Gleitlagerung einer Führungsschiene und einer Gewichtslauffläche an einer Gewichtslaufschiene gezeigt ist.

Das Konstruktionsprinzip für die Führungsschiene 15 umfasst zwei Schienenhälften 15.1 und 15.2, die durch ein Kühlsystem, d.h. eine Kühlanordnung KA voneinander getrennt, aber zusammen auf einem Tragsystem 21 befestigt sind. Das Kühlsystem KA umfasst im Prinzip zumindest ein z.B. dünnwandiges Kühl- und/oder Ovalrohr 1154 (z.B. FennSteel; Doppelrohr GEWA safe von Wieland), in dem ein Kühlmedium 18 fließt. Das Konstruktionsprinzip und/oder die verwendeten Materialien sind dabei derart, dass sowohl die Führungsschiene 15 mit den Führungsschienen-hälften 15.1 und 15.2 als auch das bevorzugte Ovalrohr 1154 gemeinsam zur Herstellung von bogenförmigen Schienenabschnitten gebogen werden können, insbesondere auch an sogenannten Gelenken G oder Gelenkbereichen, wie sie beispielsweise bei Reckanlagen auftreten. Mit gebogen werden können ebenfalls alle zusätzlichen, nachfolgend noch benötigten Abstandshalter oder Zwischenstücke 15.3 etc., auf die nachfolgend noch eingegangen wird.

Figur 13 zeigt ansonsten einen Querschnitt durch eine Führungsschiene 15 am Beispiel einer Querreckanlage, bei welcher die bereits erwähnten Kluppen 6 längsverfahrbar geführt sind. Bei der Variante gemäß Figur 13 ist unterhalb der Kluppe 6 noch zusätzlich eine Tragschiene 17 mit einer Tragschienen-Lauffläche 17a angeordnet, die vor allem der Gewichtsaufnahme der Transportkette und damit der Kluppen 6 dient. Über die Führungsschiene 15 sind vor allem die Querkräfte aufgenommen und abgestützt. Die der Aufnahme des Traggewichtes dienende Tragschiene 17 kann ebenfalls mit einem in Längsrichtung dieser Tragschiene verlaufenden Kühlkanal 41 durchsetzt sein, wie anhand von Figur 13 nur schematisch angedeutet ist. Die in Figur 13 gezeigte Tragschiene 17 mit dem integrierten Kühlkanal 41 ist beispielsweise über eine Isolierung 42 gegenüber einer unten liegenden Trageinrichtung 111 abgestützt und gehalten. Die erwähnte Tragschienen-Lauffläche 17a kann beispielsweise als Kissenplatten-Tragfläche (Pad-Lauffläche) 139 mit dort vorgesehenen Pads 140 ausgebildet sein. Dabei ist bei der Querschnittsdarstellung gemäß Figur 13 auch zu ersehen, dass das eigentliche Kluppenteil 6 über eine Brücke BR, also ein sogenanntes Brückenteil BR mit dem eigentlichen Kluppen-Kettenteil KK der Kluppen-Transporteinheit KT verbunden ist, wobei die Transporteinheit KT über den im Querschnitt U-förmigen Gleitschuh 29' an den beiden Seiten- oder Gleitflächen 15a, 15b der Führungsschiene 15 geführt wird. Ansonsten wird bezüglich des weiteren Aufbaus einer derartigen Reckanlage oder insbesondere Querreckanlage auf bekannte Lösungen oder Vorveröffentlichungen verwiesen.

Durch die doppelte Ausführung der Führungsschienen 15 unter Verwendung von zwei Halbschalen 15.1 und 15.2, die das Kühlrohr 1154 umschließen, wird eine genügend große Kühlfläche für die Wärmeübertragung geschaffen. Die Kühlung aller Funktionsflächen für die Kettenlängs- und Reckkraft ist durch die Kontaktfläche 15a und 15b gegeben.

Da es sich um ein dünnwandiges Rohr 1154 unter Ausbildung eines Kühlkanals K1 handelt, führt ein unter Druck stehendes inkompressibles Kühlmedium dazu, dass ein inniger Kontakt zwischen dem Kühlrohr und den beiden Halbschalen der Führungsschiene hergestellt wird. Natürlich ist es konstruktiv möglich, über eine Strukturierung der Innenseiten der Halbschalen den Wärmekontakt zu verbessern.

Bei der Herstellung der Führungsschiene 15 wird bevorzugt ein Kühlrohr, insbesondere ein Ovalrohr 1154 verwendet, das mit seiner größeren Erstreckung parallel zu den Halbschalen 15.1, 15.2 ausgerichtet wird, wobei die Dicke des Ovalrohres in der schmäleren Quererstreckungsbreite größer ist als der lichte Innenabstand zwischen den beiden Führungsschienen-Hälften 15.1 und 15.2 in endgültig montierter Form. Während des Montagevorgangs nimmt dabei das Ovalrohr 1154 oder ein vergleichbares flexibles Rohr eine Rohrbreite RB entsprechend dem lichten Innenabstand zwischen den Innenflächen 15.1' und 15.2' der beiden Halbschalen 15.1 und 15.2 ein. Mit anderen Worten wird dadurch eine großflächige Kontaktwirkung zwischen der Wandung 1154' des Kühlrohrs 1154 und den Innenflächen 15.1' und 15.2' der beiden Halbschalen 15.1 und 15.2 zur Erzielung eines bestmöglichen Wärmeübergangs und damit einer bestmöglichen Kühlung realisiert.

Bei Gleitsystemen, bei denen die Führungsschiene zusätzlich als Tragschiene dient, wird der obere Bereich entsprechend konstruiert, um auch hier eine gute Wärmeübertragung zu gewährleisten. Es wird dazu auf die Figuren 13a und 13b verwiesen, wobei Figur 13a eine vertikale Querschnittsdarstellung durch ein Gleitsystem (Reckanlage) mit einer oberen und einer unteren Führungsschiene gezeigt ist, wobei die untere Führungsschiene gleichzeitig auch als Tragschiene für die Kluppen einer Reckanlage dient, und in Figur 13b eine vergrößerte Detaildarstellung der unteren Führungsschiene und der darauf gleitenden Transporteinheit mit einer Kluppe wiedergegeben ist.

Nachfolgend soll auf einige Varianten der Kühleinrichtungen eingegangen werden.

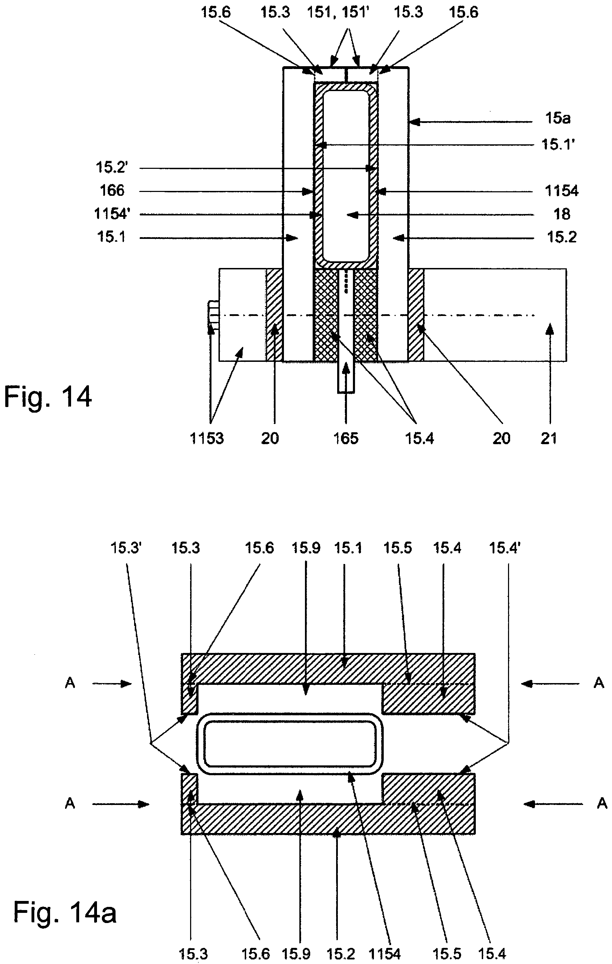

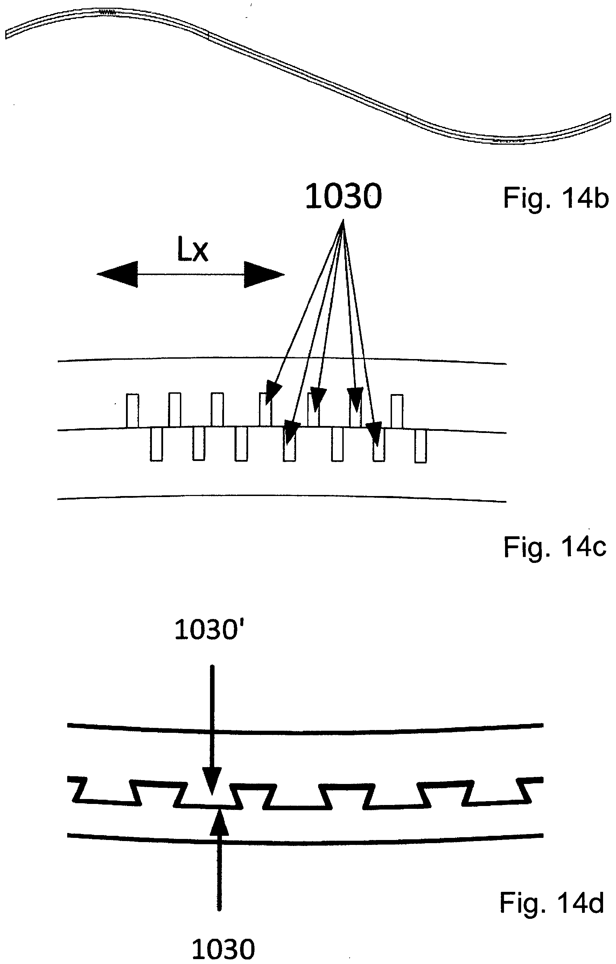

Dabei ist anhand von Figur 14 eine schematische Querschnittsdarstellung durch eine gekühlte Führungsschiene gezeigt, die ein Grundkonzept einer direkten Führungsschienenkühlung wiedergibt.

Bevor die Konstruktion bezüglich der anhand von Figur 14 im Querschnitt gezeigten Führungsschiene im Detail erläutert wird, soll zum besseren Verständnis der grundsätzliche Aufbau der Führungsschiene zunächst anhand von Figur 14a erläutert werden.

Dabei ist in Figur 14a die Führungsschiene mit zwei Halbschalen im Querschnitt in explosionsartiger Darstellung wiedergegeben, nämlich mit einer Halbschale 15.1 und einer Halbschale 15.2. Im Regelfall können diese Halbschalen 15.1 und 15.2 mittels einer rechteckigen Hohlfräse ausgefräst sein, nämlich aus einem vollen Metallblock. In dem geraden Teilabschnitt liegen dann die beiden Hohlkehlen 15.9, also Ausnehmungen 15.9 vor, die keiner weiteren exakten Bearbeitung bedürfen. In diesen beiden Hohlkehlen 15.9 kann dann das im Querschnitt eher rechteckig geformte Kühlrohr 1154 eingefasst werden.

Die erwähnten Hohlkehlen 15.9 sind dann in Vertikalrichtung - wie sich aus Figur 14 ergibt - durch zurückgelassene Materialverdickungen oder -stege 15.3 und 15.4 begrenzt, deren aufeinander zu weisende Anlageflächen 15.3' bzw. 15.4' im montierten Zustand aufeinander liegen. Diese Materialverdickungen 15.3 und 15.4 dienen als Anschlagsstege, Abstandshalter oder Zwischenstücke, die bevorzugt einstückig mit den gesamten Halbschalen ausgebildet sind.

Da die erwähnten und nachfolgend noch weiter erörterten Halbschalen mit dem innenliegenden Kühlrohr auch als bogenförmige Führungsschienenabschnitte eingesetzt werden sollen, insbesondere auch in Gelenkabschnitten, sind dann zusätzlich noch Ausfräsungen bzw. Aussparungen 15.5 und 15.6 vorgesehen, die in Vertikalrichtung durch die als Abstandshalter dienenden Materialstege 15.3 und 15.4 verlaufen. Diese Ausfräsungen oder Aussparungen sind in Figur 14a strichliert angedeutet.

In den geraden Führungsschienenabschnitten sind die vorstehend erwähnten Aussparungen 15.5 und 15.6 in den als Abstandshalter dienenden Materialstegen oder Verlängerungsabschnitten 15.3 und 15.4 nicht notwendig.

In den Figuren 14b, 14c und 14d sind entsprechende Ansichten auf die Führungsschiene gemäß Pfeildarstellung A in Figur 14a wiedergegeben, also in Vertikalrichtung von oben her auf die obere Schmalseite 151' der Führungsschiene 15 oder in Vertikalrichtung auf die untere Schmalseite 152' der Führungsschiene 15.

Wird das vorstehende, vom Grundaufbau erläuterte und nachfolgend anhand von Figur 14 beschriebene Kühlrohr in der Führungsschiene in einem Gleitsystem (Gleitabschnitt) der Anlage verwendet, dann wird das dünnwandige Kühlrohr 1154 mit der aus den beiden Halbschalen 15.1 und 15.2 gebildeten Führungsschiene 15 gemeinsam mitgebogen. Da das Kühlrohr innen geschmiert und zudem bei großen Radien nicht sehr oft gebogen wird, ist eine Materialermüdung nicht zu befürchten.

Um aber in einem Kurvenabschnitt die Führungsschiene mit dem entsprechenden Kühlrohr gut biegen zu können, ist die Führungsschiene insbesondere in einem Gelenkbereich mit Aussparungen in Form von Schlitzen oder in Art eines Reißverschlusses oder ähnlichen Maßnahmen versehen.

Die anhand von Figur 14c in Draufsicht gezeigten Ausnehmungen 1030 sind beispielsweise jeweils in den abstandshalterähnlichen Materialvorsprüngen 15.3' und 15.4' eingearbeitet. Wird die Führungsschiene also quer zu ihrer Längserstreckung LX gebogen, dann werden die auf der einen Seite der Kontaktfläche der beiden Halbschalen liegenden Ausnehmung leicht gestaucht (nämlich die auf der Innenseite des Bogenabschnittes) und die auf der anderen Seite der Kontaktfläche gedehnt (nämlich die auf der Außenseite des Bogenabschnittes).

Bei der Variante gemäß Figur 14c sind schwalbenschwanzförmige Ausnehmungen 1030 vorgesehen, in die schwalbenschwanzförmige Erhebungen 1030' eingreifen, die jeweils in einem anderen abstandshalterähnlichen Materialvorsprung der jeweils anderen Halbschale ausgebildet sind. Durch dieses verzahnte System werden beide Halbschalen gemeinsam im Bogenabschnitt gebogen, ohne dass es zu einer relativen Längenänderung kommt. Ansonsten wäre zu befürchten, dass die in dem Bogenabschnitt jeweils außenliegende Halbschale beim Verformen eine Längenkürzung erfahren würde.

Abweichend von den beiden gezeigten Maßnahmen können die Führungsschienen und insbesondere die Halbschalen alle konstruktiven Varianten aufweisen, um sie optimal miteinander zu verbinden. Bei der erwähnten Verzahnung werden beispielsweise nur die Teilstücke größer ausgelegt, um die Bearbeitung zu ermöglichen. Die anderen Teilstücke werden lediglich mit Schlitzen versehen, um die Montage der Halbschalen zu ermöglichen. Unabhängig davon können die Führungsschienen aber auch aus Blechpaketen bestehen oder diese umfassen.

Nachfolgend wird nunmehr auf die Querschnittsdarstellung gemäß Figur 14 Bezug genommen, in der der Gesamtaufbau der Führungsschiene mit den erwähnten beiden Halbschalen 15.1 und 15.2 zu entnehmen ist, die das dünnwandige Kühlrohr 1154 mit einer Rohrwandung 1154' umschließen, in dem sich ein Kühlmittel 18 befindet, also durchströmen kann. Die Befestigung der so gebildeten Führungsschiene 15 mit der Tragstruktur 21 erfolgt z.B. über Verschraubungen 1153 mit der Tragstruktur 21. Zwischen der Tragstruktur 21 und der Führungsschiene 15 kann eine Wärmeisolierung 20 angebracht sein, die in der Schnittdarstellung gemäß Figur 14 schraffiert wiedergegeben ist. Die Kraftverbindung auf die Tragstruktur erfolgt entweder über die Halbschalen, die von der Schraubverbindung wie in Figur 14 dargestellt ist durchsetzt werden, und/oder über (zusätzliche) untere und/oder obere Zwischenstücke 15.3, 15.4, wie aus der Darstellung gemäß Figur 14 zu entnehmen ist. Diese Zwischenstücke 15.3 können dem Innenabstand der Halbschalen entsprechen, wobei die Halbschalen als plattenförmige Halbschalen mit gleicher Dicke von der Oberkante 151 bis zur Unterkante 152 verlaufend ausgebildet sind.

Aus Figur 14 ist ferner zu ersehen, dass noch eine von unten her zugeführte Schmiermittelzufuhr 165 vorgesehen ist, durch die beispielsweise ein Gleitmittel über den Schmiermittelpfad 166 geschmiert werden kann. Unter dem Schmiermitteldruck und durch die Kapillarwirkung ist somit eine Schmierung über den Spalt zwischen den beiden Halbschalen auf die Führungs- bzw. Tragflächen 15a und 15b möglich.

Der erwähnte Schmiermittelpfad verläuft also ausgehend von der von unten her zugeführten SchmiermittelzuführLeitung 165 über die Außenwandung des beim Zusammenfügen der beiden Halbschalen 15.1 und 15.2 verformbaren Kühlkanal-Rohres 1154 und der dazu benachbart anliegenden Innenseite 15.1' und 15.2' der ersten und zweiten Halbschale 15.1, 15.2. Im gezeigten Ausführungsbeispiel weisen die beiden Halbschalen gegenüberliegend zu den Materialstegen 15.3 Zwischenstücke 15.4 (oder ein Zwischenstück 15.4 oder zwei im Querschnitt L-förmige Erweiterungen 15.4) auf, die zu den Halbschalen 15.1 bzw. 15.2 gehören. Je nachdem verläuft der Schmiermittelpfad 166 dann zwischen den inneren Anlageflächen 15.4' der Halbschalen und der Außenfläche des Kühlrohres 1154.

Ebenso wäre es möglich, dass beispielsweise das obere Zwischenstück 15.4 in Längsrichtung der Führungsschiene beabstandet kleine Bohrungen aufweist, über die das zugeführte Schmiermittel dann nach oben hin auf die obere Schmalseite 151', d.h. die Oberkante 151 der Führungsschiene 15 austreten und von dort zu den seitlichen Gleitflächen 15.1' und 15.2' gelangen kann.

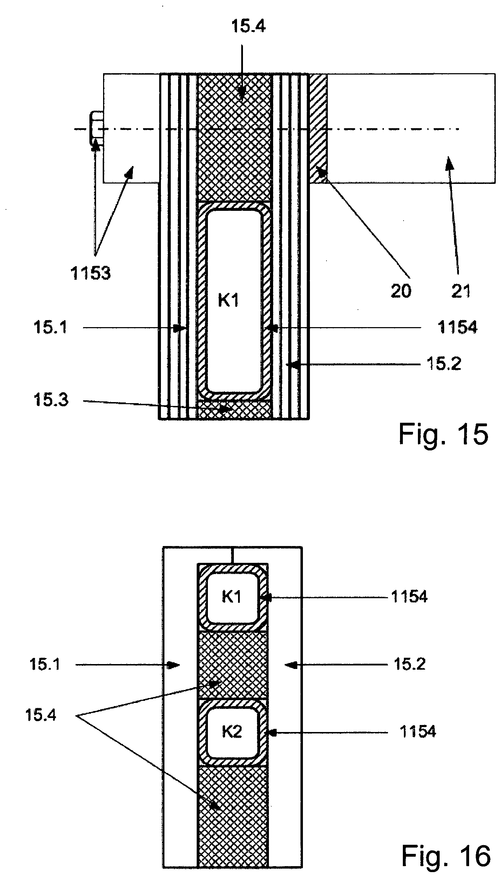

Nachfolgend wird auf Figur 15 Bezug genommen.

Figur 15 zeigt eine Variante, in der in ähnlicher Weise Führungseinheiten aus Blechpaketen (Blechstreifen) bestehen können. Die Verbindung der beiden Halbschalen 15.1 und 15.2 (die jeweils aus Blechpaketen bestehen) kann hier über eine Verschraubung 1153 an der Tragstruktur erfolgen, eventuell auch unter zusätzlicher Verwendung einer Halteverbindung zwischen den Halbschalen. Diese Halteverbindungen sind oberhalb und unterhalb des flexiblen Rohrs zwischen den Blechstreifen eingezeichnet. Diese Halteverbindungen können durch Verzahnungen und andere konstruktive Verbindungen ausgebildet sein, um eine ortsfeste Verbindung zwischen den Halbschalen (hier aus Blechpaketen oder Blechstreifen bestehend) und der jeweils quer zur Längsrichtung der Führungsschiene verlaufenden oberen und/oder unteren Halteverbindungen herzustellen.

Da manche Transportsysteme zwischen den Blechpaketen mit sogenannten Wellfedern ausgestattet sind, ist hier die Aufrüstmöglichkeit mit einem Kühlsystem möglich, indem zumindest in Teilabschnitten des Umlaufweges die Wellfedern durch das Kühlrohr ersetzt werden.

Wie anhand der Querschnittsdarstellung gemäß Figur 16 zu ersehen ist, sind auch Lösungen umsetzbar, bei denen mehrere Kühlrohre 1154 unter Ausbildung mehrerer Kühlkanäle K, z.B. eines Kühlkanals K1 und K2 im Abstand übereinander liegend in einer Führungsschiene angeordnet sind oder beispielsweise mäanderförmig zwischen den beiden Halbschalen in Längsrichtung der Führungsschiene verlaufen und über die Halbschalen geführt sind. Auch hier können zwischen den Halbschalen immer dort, wo die Halbschalen über Materialerweiterung sich nicht direkt aufeinander abstützen (wie in Figur 16 obenliegend gezeigt), noch zusätzliche Zwischenstücke 15.3 eingefügt werden, die den Abstandsraum zwischen den Innenflächen 15.1' und 15.2' der beiden Führungsschienen-Hälften 15.1 und 15.2 ausfüllen, der nicht von den Kühlrohren 1154 durchsetzt ist. Anstelle der Abstandshalter oder Zwischenstücke 15.3 können auch die Führungsschienen-Hälften 15.1 und 15.2, also gegebenenfalls die Halbschalen 15.1 und 15.2 mit aufeinander zu weisenden Führungsschienen-Ansätzen 15.4 ausgestattet sein, die die Anschlagsbegrenzung ergeben, mit der die beiden Hälften 15.1 und 15.2 aneinander liegend zusammengefügt werden können. Möglich wäre auch, dass nur eine Führungsschienen-Hälfte 15.1 oder 15.2 mit derartigen vorstehenden Ansätzen 15.4 ausgestattet ist, und die andere Führungsschienen-Hälfte dann beispielsweise plattenförmig ausgestaltet ist und an den entsprechenden Vorsprüngen auf der gegenüberliegenden Führungsschienen-Hälfte anliegt und aufsetzt. In dem so gebildeten Freiraum zwischen den beiden Innenseiten der Führungsschienen-Hälften sitzen dann die einen oder mehreren Kühlkanäle, die von den beiden Führungsschienen-Hälften sandwichartig umgriffen werden.

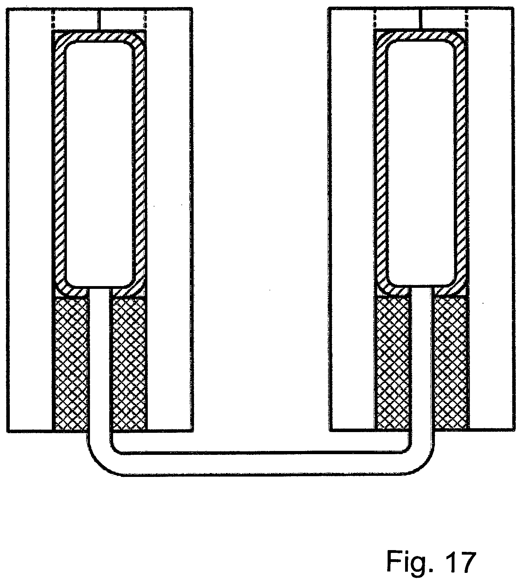

Anhand von Figur 17 ist nur schematisch gezeigt, wie die Verbindung zwischen den erläuterten Kühlkanälen bezüglich zweier Streckenabschnitte erfolgen kann.

Die Führungsschienen oder Führungsschienen-Einheiten bestehen fertigungstechnisch aus einzelnen Streckenabschnitten, die über flexible Verbindungen wie etwa Wellenschläuche druckdicht miteinander verbunden werden können. Figur 17 zeigt hierzu nur schematisch diese Funktionsweise bezüglich zweier der Einfachheit halber im Vertikalschnitt nebeneinander dargestellter Führungsschienen-Einheiten. Ansonsten wird auf die oben geschilderten Ausführungen bezüglich der Verbindung zweier Führungsschienen verwiesen, über die Kühlmittel ein- bzw. ausgeleitet werden kann, gegebenenfalls auch aus einem Führungsschienen-Abschnitt ausgeleitet und in den nachfolgenden Führungsschienen-Abschnitt direkt eingeleitet.

### E: Kühlung unter Verwendung von Wärmerohren oder so genannten Heatpipes

Es ist bereits im Zusammenhang mit den oben erläuterten Ausführungsformen beschrieben worden, dass ergänzend Wärmerohre, d.h. sogenannte Heat Pipes eingesetzt werden können. Diese können beispielsweise in Längsrichtung einer Führungsschiene in entsprechend versetzt zueinander liegenden Bohrungen oder vorzugsweise Sackbohrungen eingeführt werden, wobei die Heat Pipes oder Wärmerohre dann mit einer entsprechenden Längserstreckung über die Führungsschiene bevorzugt an deren Schmalseite oder Unterkante (bzw. Oberkante) überstehen. Diese Wärmerohre oder Heatpipes sind geeignete Mittel, sehr schnell und intensiv Wärme aus der Führungsschiene nach außen hin abzuleiten. Wenn die Umgebungsbedingungen zur Kühlung nicht ausreichen, bietet sich an, diese Wärmerohre in einen benachbart und damit außerhalb der Führungsschiene verlaufenden Kühlkanal einzuführen bzw. dort enden zu lassen. Dieser Kühlkanal kann nunmehr vom Kühlmedium durchströmt werden, um das zu der jeweiligen Führungsschiene gegenüberliegende Ende der Wärmerohre/Heatpipes effektiv zu kühlen.

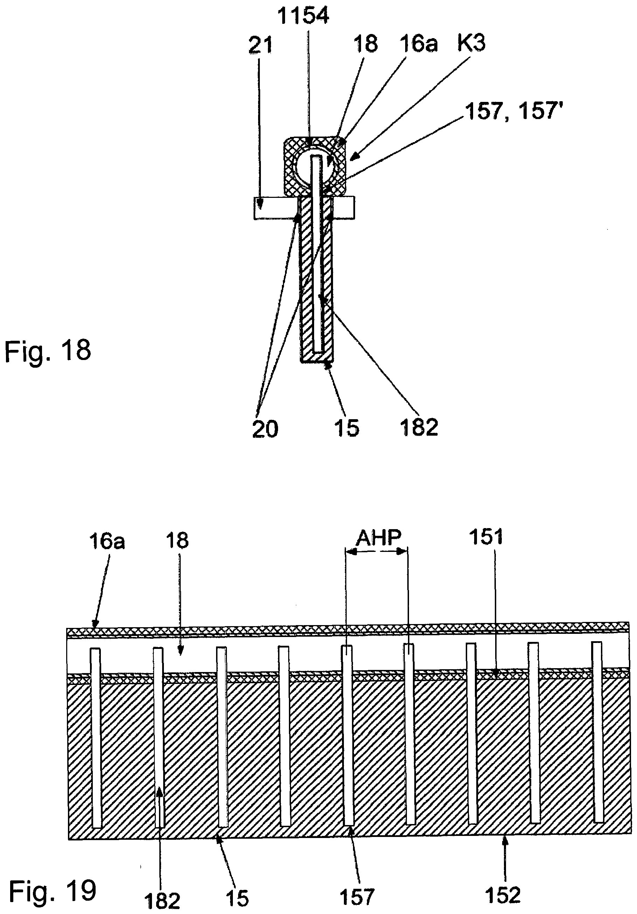

In Figur 18 sind diese Verhältnisse schematisch in einer Querschnittsdarstellung und in Figur 19 in einer Längsschnittdarstellung wiedergegeben.

Der Abstand AHP der Wärmerohre (Heat Pipes) 182 bzw. der Abstand AHP der entsprechenden Bohrungen 157 oder Sackbohrungen 157 in der Führungsschiene 15 hängen von den Einsatzbedingungen ab. Je größer die abzuleitende Hitze und je größer der Kühleffekt sein soll, um so enger müssen die Bohrungen 157 gesetzt werden. Bevorzugt werden dabei diese Bohrungen senkrecht in die betreffende Kante (Unter- oder Oberkante 151, 152) bzw. Schmalseite 151' oder 152' der Führungsschiene 15 eingebracht, wie dies aus der Darstellung gemäß Figur 18 und 19 zu ersehen ist. Dieser erwähnte Abstand AHP zwischen den einzelnen Heat Pipes 182 entspricht dabei bevorzugt dem Abstand zwischen zwei aufeinander folgenden, jeweils weiter innen liegenden Durchdringungsbereichen DX1a des ersten Kühlkanals K1 bzw. DX2a des zweiten Kühlkanals K2 (Figur 6). Sollen mehrere derartige Wärmeleitrohre oder Heat Pipes eingesetzt werden, müssten auch die Neigungswinkel α bzw. β größer gewählt werden, damit der Abstand der Durchdringungsbereiche DX1a (bzw. DX2a) und damit die Abstandsfolge AHP der Zusatzbohrungen 157 und damit der Heat Pipes enger wird. Unter Umständen können aber auch in einem V-förmigen Materialbereich zwischen zwei verbundenen Querkanälen 154a, 154b in Abweichung zu der Darstellung gemäß Figur 6 auch zwei Zusatzbohrungen 157 in engem Längsversatz zur Führungsschiene nebeneinander angeordnet sein, so dass in diesem Raum anstelle jeweils einer in Figur 6 gezeigten Zusatzbohrung zwei in Längsrichtung LX der Führungsschiene versetzt zueinander liegende Zusatzbohrungen 157 vorgesehen sind, so dass in der gleichen Abstandsfolge AHP immer zumindest ein Paar von Wärmerohren oder Heat Pipes vorgesehen sein kann.

Im Gegensatz zu dem einleitenden Ausführungsbeispiel, bei welchem durch schräg verlaufende Bohrungen 154 ein in einer Führungsschiene zickzackförmig verlaufender Kühlkanal K1 und/oder K2 gebildet wird, bei welchem die Wärmerohre 181 oder Heat Pipes 182 als ergänzende Kühlmaßnahmen eingesetzt worden sind, beschreibt das vorliegende Beispiel eine Variante, bei der die Kühlung nur durch die erwähnten Wärmerohre 181/Heat Pipes 182 bewirkt wird, gegebenenfalls mit einem extern zur Führungsschiene 15 vorgesehenen und verlaufenden Kühlkanal K3 zur effektiven Kühlung der Wärmerohre/Heat Pipes.

Im gezeigten Ausführungsbeispiel ist die Führungsschiene wiederum obenliegend beispielsweise über die erwähnten Montage- und/oder Befestigungsbohrungen 153 an einer Trageinrichtung 21 in geeigneter Weise befestigt. Im Bereich dieser Trageinrichtung ist dann der externe Kühlkanal K3 mit dem inneren Kühlrohr 1154 montiert und vorgesehen, der ebenfalls in Verlängerung zu den Bohrungen 157 der Führungsschiene mit entsprechenden Bohrung 157' versehen ist, durch welche die in den Bohrungen 157 in der Führungsschiene eingesteckten Wärmerohre 182 bzw. Heat Pipes 182 bis in das Innere des Kühlkanals K3 hineinragen, der von einem Kühlmittelmedium durchströmt ist. Dadurch kann eine sehr effiziente Kühlung der Führungsschiene bewirkt werden. Die erwähnten Wärmerohre 181, beispielsweise in Form von Kupferbolzen oder bevorzugt die Heat Pipes sind dabei in entsprechenden Bohrungen am Austritt der Führungsschiene bzw. am Eintritt zum Kühlkanal K3 jeweils dichtend eingefügt, so dass kein Kühlmedium ausströmen kann.

### F: Kühlung mittels aufgeschweißter oder aufgelöteter Flexrohre

Als weitere Lösung zur Kühlung insbesondere auch im Bereich der bogenförmig unterschiedlich einstellbaren Gelenke im Verlauf einer Führungsschiene kann beispielsweise auch ein flexibler Wellschlauch (der nachfolgend teilweise auch als Flexschlauch oder Flexrohr 209 bezeichnet wird) verwendet werden, der beispielsweise seitlich an einer Gleit- oder Führungsschiene, d.h. Gleit- oder Führungsleiste angelötet werden kann. Ein Lötvorgang ist hier einem Schweißvorgang vorzuziehen, da der Fließpunkt des Lotes höher ist als die maximal erreichbare Schienentemperatur (Ofentemperatur), aber noch unterhalb der Anlasstemperatur des Vergütungsstahls. Somit wird der Stahl nicht weich und behält seine Festigkeit und Verschleißzähigkeit.

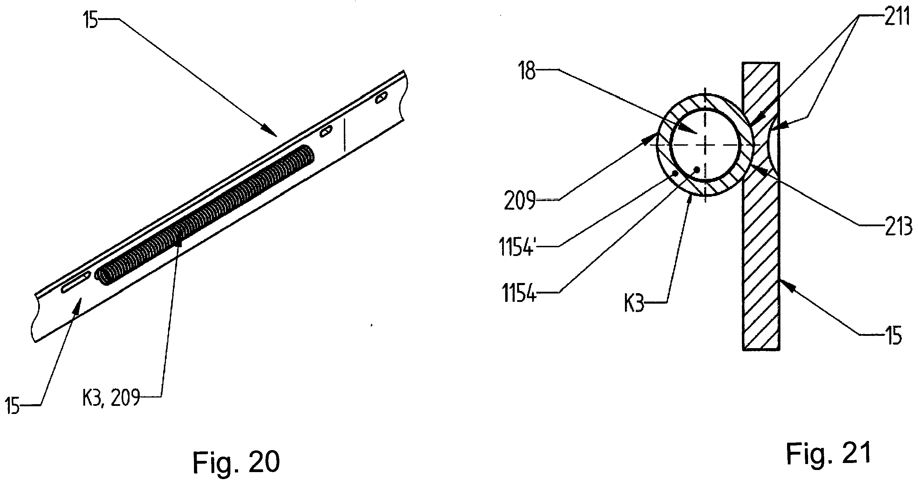

Der Wellschlauch kann dann mittels eines geeigneten Kühlmediums durchströmt werden, wie dies beispielsweise anhand von Figuren 20 und 21 dargestellt ist.

Zur besseren Lötverbindung zwischen einem Wellschlauch und einer Führungs- oder Gleitschiene oder -Leiste kann - wie in der Querschnittsdarstellung gemäß Figur 21 zu ersehen ist - im Bereich des Wellschlauches eine konkave Materialverdünnung im Seitenbereich (Außenfläche) der Führungsschiene eingearbeitet sein. Hier kann dann mit guter Mantelkontaktfläche unter Verwendung des geschilderten Lots 213 die Lötverbindung zwischen der Außenseite des Wellschlauches und der konkaven Ausnahme in der Führungsschiene erfolgen.

Auch bei dieser Lösung wäre eine Kombination mit den bereits beschriebenen Wärmerohren/Heat Pipes möglich. Mit anderen Worten können auch hier die Wärmerohre oder Heat Pipes ergänzend zu dem Wellschlauch eingesetzt werden, um möglichst effizient und wirksam auftretende Wärme abzutransportieren. Auch in diesem Fall könnten beispielsweise die verwendeten Heat Pipes im Nahbereich des mit Kühlmedium durchströmten Wellschlauchs vorgesehen sein und in einem separaten Kühlkanal enden, um die Wärmerohre/Heat Pipes effizient zu kühlen.

Obgleich diese Lösung grundsätzlich geeignet ist, eine ausreichende Kühlung für die erwähnten Führungsschienen zu gewährleisten, d.h. für Führungsschienen, die im Bereich von Streckenabschnitten auch bogenförmig gekrümmt werden können, ist das Verfahren gleichwohl teuer und weniger prozesssicher, zumal auch das Flussmittel extrem aggressiv ist und die Gleitflächen der Führungsschiene angreifen kann. Von daher werden die anderen beschriebenen Verfahren bevorzugt.

### G: Zu verwendende Kühlmedien

Als Kühlmedium können alle geeigneten Medien in Betracht kommen, d.h. vor allem fließfähige, gegebenenfalls sogar gasförmige Medien. Bevorzugt werden als Kühlmedium Wasser oder Wärmeträgeröl eingesetzt. Eingesetzt werden können aber auch alle anderen Arten von Kühlmedien, wie beispielsweise Medien zur Wärmevergleichmäßigung, z.B. Diphyl.

### H: Schienenmaterial und Bearbeitung

Als Schienenmaterial werden Vergütungsstähle wie beispielsweise 42CrMo4 verwendet. Um hohen Verschleißwiderstand zu gewährleisten, ist das Material vergütet. Zudem wird eine Oberflächenbehandlung durchgeführt, beispielsweise Gasnitrucaburieren. Versuche haben gezeigt, dass das elastische Verformen mit diesem Material funktioniert.

Es wurden Fertigungsversuche durchgeführt wie tief gebohrt werden kann, welcher Winkel ist noch möglich, wann wird Wärmebehandlung durchgeführt, wie kann gedichtet werden; usw.

Es wurden sehr viele Dauerfestigkeitsversuche unter Wärmeeinwirkung durchgeführt.

Es wurden Versuche durchgeführt, ob die Schiene bricht, ob Nitrieren ohne Verzug möglich ist, ob der Bohrer nicht zu stark verläuft, oder ob sich die Schiene nicht mehr gleichmäßig, sondern fassettenartig biegt usw.

### I: Isolierung der Führungsschienen-Struktur gegenüber der Trägerstruktur

Zielsetzung der gekühlten Gleitleisten ist das Kühlen der Reibstelle/Reibfläche zwischen Gleit- Rollenkörper und Schiene. Zwangsläufig werden auch noch andere Bereiche mitgekühlt bzw. Anbauteile oder Träger mitgekühlt. Dies führt durch Wärmestrahlung und Wärmekonvektion in dem heißen Ofen zu erheblichen Kühlverlusten (der Ofen wird sozusagen durch die Seitenführungskühlung gekühlt). Aus diesem Grund sind wesentlich größere Kühlaggregate und Volumenströme notwendig als eigentlich für die reine Kühlung des Gleitkontakts notwendig. Um das zu vermeiden, ist eine Isolierung 20 der Verbindungsstellen zwischen der Führungsleiste und der Umgebung anzustreben.

Möglich sind alle Wärmeisolationsmaterialien, wie Nomex, andere Verbundwerkstoffe, PEEK usw.

Es gibt auch streichbare (pastenartige) Produkte, die mit Pinsel oder Spachtel aufgetragen werden. Hiermit könnten die betreffenden Flächen einfach isoliert werden.

Es wird ausdrücklich darauf hingewiesen, dass die unterschiedlichen Ausbildungen und Umsetzungen der Kühlkonzepte nicht nur alternativ, sondern auch gemeinsam verwirklicht werden können. So ist es beispielsweise möglich, die anhand von Figur 6 und Figur 7 in den Zusatzbohrungen 181 eingesetzten Wärmeleitrohre oder Heat-Pipes so über die eine Schmalseite überstehen zu lassen, dass sie in einen dort parallel zur Führungsschiene verlaufenden äußeren Kühlkanal K3 eingreifen und enden, wie dies anhand von Figur 18 und 19 dargestellt ist. Ebenso könnte auch das noch zusätzlich beschriebene, auf der äußeren Breitseite aufgeschweißte oder aufgelötete Flexrohr zusätzlich eingesetzt werden, zusätzlich zu den anderen beschriebenen Kühlmaßnahmen. Ebenso möglich wäre, dass in einigen Führungsschienen anstelle der beispielsweise durch Querbohrungen eingearbeiteten einen oder mehreren Kühlkanäle K1, K2 Führungsschienen und Führungsschienenabschnitte verwendet werden, bei welchen ein oder mehrere flexible Kühlrohre innerhalb zweier oder mehrerer Halbschalen der Führungsschiene ausgebildet sind. Es wird insoweit auf alle beschriebenen Maßnahmen zur Kühlung einer Führungsschiene verwiesen.

## Patentansprüche

1. Führungsschiene, insbesondere für eine Transporteinrichtung oder Reckanlage, mit folgenden Merkmalen:
- für die Führungs- und/oder Tragschiene (15) ist eine Kühleinrichtung (KA) in Form zumindest eines von einem Kühlmedium (18) durchströmbaren Kühlkanals (K1, K2, K3) vorgesehen,
- die Kühleinrichtung (KA) ist dabei so aufgebaut
a) dass der zumindest eine Kühlkanal (K1, K2) mehrere schräg zur Längsrichtung (LX) der Führungs- und/oder Tragschiene (15) verlaufende Querbohrungen (154; 154a-154d) umfasst, die abwechselnd mit unterschiedlichem Neigungswinkel (α, β) gegenüber der Längsrichtung (LX) der Führungs- und/oder Tragschiene (15) so eingebracht sind, dass jeweils zumindest zwei aufeinander folgende Querbohrungen (154; 154a-154d) sich in einem Durchdringungsbereich (DX1a, DX1b; DX2a, DX2b) unter Ausbildung eines durchgängigen Kanals (K1, K2) schneiden, und/oder
b) dass die Führungs- und/oder Tragschiene (15) zumindest zwei Halbschalen oder Hälften (15.1, 15.2) umfasst, zwischen denen sandwichartig ein flexibles Rohr (1154) unter Ausbildung des zumindest einen Kühlkanals (K1, K2) angeordnet ist, und/oder
c) dass der zumindest eine Kühlkanal (K3) außerhalb der Führungs- und/oder Tragschiene (15) parallel zu dieser verlaufend angeordnet ist, und dass in der Führungsschiene (151) eine Vielzahl von in Längsrichtung (LX) der Führungs- und/oder Tragschiene (15) versetzt liegenden und quer und vorzugsweise senkrecht dazu ausgerichteten Bohrungen (157) eingebracht sind, in denen Wärmeleitungen (181) und/oder Heat Pipes (182) eingesteckt sind, die über die Führungs- und/oder Tragschiene (15) überstehen und an dem außerhalb der Führungs- und/oder Tragschiene (15) verlaufenden, zumindest einen Kühlkanal (K3) thermisch leitend angebunden sind.

2. Führungsschiene nach Anspruch 1, **dadurch gekennzeichnet, dass** die Führungs- und/oder Tragschiene (15) einen rechteckförmigen Querschnitt quer zu ihrer Längsrichtung (LX) aufweist, und zwar unter Ausbildung einer Ober- und einer Unterkante (151, 152) und/oder einer oberen und einer unteren Schmalseite (151', 152') sowie zwei parallel zueinander verlaufende Breitseiten oder Gleitflächen (15a, 15b), die sich in Querrichtung quer zu ihrer Längsrichtung (LX) in einen Gleit- und/oder Transportbereich (GH) und einen Montage- und Haltebereich (MH) gliedern, und dass der zumindest eine Kühlkanal (K1, K2) im Gleit- und/oder Transportbereich (GH) vorgesehen ist.

3. Führungsschiene nach Anspruch 1 oder 2, **dadurch gekennzeichnet, dass** die Führungs- und/oder Tragschiene mit dem darin und/oder daran ausgebildeten, zumindest einen Kühlkanal (K1, K2) knickfrei biegbar oder gebogen ist, vorzugsweise in Querrichtung quer zu den Breitseiten (15a, 15b).

4. Führungsschiene nach einem der Ansprüche 1 bis 3, **dadurch gekennzeichnet, dass** der Durchmesser (D) des zumindest einen Kühlkanals (K1, K2, K3) größer als 10%, insbesondere größer als 20%, 30%, 40%, 50%, 60%, 70% oder größer als 80% der Breite (B) der Führungs- und/oder Tragschiene (15) und kleiner als 90%, insbesondere kleiner als 80%, 70%, 60%, 50%, 40% oder kleiner als 30% der Breite (B) der Führungs- und/oder Tragschiene (15) ist.

5. Führungsschiene nach einem der Ansprüche 1 bis 4, **dadurch gekennzeichnet, dass** zumindest zwei Kühlkanäle (K1, K2) in Längsrichtung (LX) durch die Führungs- und/oder Tragschiene (15) gerade oder zick-zack-förmig verlaufend ausgebildet sind.

6. Führungsschiene nach einem der Ansprüche 1 bis 5, **dadurch gekennzeichnet, dass** die mehreren Querbohrungen (154) jeweils von einer Schmalseite (151', 152') aus in die Führungs- und/oder Tragschiene (15) eingebracht sind, derart, dass zwei aufeinander folgende Querbohrungen (154; 154a, 154b, 154c, 154d) gegenüber der Längsrichtung (LX) der Führungs- und/oder Tragschiene (15) mit gegensinnigem Neigungswinkel (+α, -α; +β, -β) jeweils einen Durchdringungsbereich (DX1a, DX1b; DX2a, DX2b) aufweisen und dadurch ein zick-zack-förmiger Kühlkanal (K1, K2) gebildet ist, wobei die Bohrungsöffnungen (154'; 154'a-154'd) an der zugehörigen Schmalseite (151', 152') der Führungs- und/oder Tragschiene (15) verschlossen sind, vorzugsweise durch eingedrehte und/ oder eingeklebte Verschlussschrauben (161).

7. Führungsschiene nach einem der Ansprüche 1 bis 6, **dadurch gekennzeichnet, dass** von beiden Schmalseiten (151', 152') aus jeweils Querbohrungen (154; 154a-154d) in Form von Sackbohrungen in die Führungs- und/oder Tragschiene (15) eingebracht sind, wobei jeweils in Längsrichtung (LX) der Führungs- und/oder Tragschiene (15) versetzt liegende Querbohrungen (154; 154a - 154d) sich unter Ausbildung von Durchdringungsbereichen (DX1a, DX1b; DX2a, DX2b) schneiden, derart, dass zwei zick-zack-förmig oder zick-zack-ähnlich nebeneinander verlaufende Kühlkanäle (K1, K2) in der Führungs- und/oder Tragschiene (15) ausgebildet sind.

8. Führungsschiene nach einem der Ansprüche 1 bis 7, **dadurch gekennzeichnet, dass** die Querbohrungen (154; 154a, 154b) des ersten Kühlkanals (K1) in einem abwechselnd positiven und negativen Neigungswinkel (+α, -α) von der einen Schmalseite (151') der Führungs- und/oder Tragschiene (15) aus eingebracht sind, und dass die Querbohrungen (154; 154c, 154d) des zweiten Kühlkanals (K2) von der gegenüberliegenden Schmalseite (152') der Führungs- und/oder Tragschiene (15) mit einem abwechselnden Neigungswinkel (+β, -β) eingebracht sind.

9. Führungsschiene nach Anspruch 8, **dadurch gekennzeichnet, dass** die Neigungswinkel (+α, -α; +β, -β) der Querbohrungen (154; 154a-154d) der beiden Kühlkanäle (K1, K2) unterschiedlich sind.

10. Führungsschiene nach einem der Ansprüche 7 bis 9, **dadurch gekennzeichnet, dass** die Querbohrungen (154; 154a-154d) als Sackbohrungen in einer solchen Länge ausgebildet sind, dass die beiden Kühlkanäle (K1, K2) voneinander getrennt sind.

11. Führungsschiene nach einem der Ansprüche 1 bis 10, **dadurch gekennzeichnet, dass** zumindest einige Querbohrungen (154) vorgesehen sind, die so lang ausgebildet sind, dass sie als Teil des einen Kühlkanals (K1 oder K2) sich mit einer Querbohrung (154; 154a-154d) des zweiten Kühlkanals (K2) schneiden, so dass die beiden Kühlkanäle (K1, K2) miteinander verbunden sind.

12. Führungsschiene nach einem der Ansprüche 1 bis 11, **dadurch gekennzeichnet, dass** in den Führungsschienen-Endbereichen (154') im Falle eines die Führungs- und/oder Tragschiene (15) durchsetzenden Kühlkanals (K1, K2) eine Verbindungsbohrung (154e, 154f) ausgebildet ist, die von einer der beiden Schmalseiten (151', 152') und vorzugsweise von der Schmalseite (151') in die Führungs- und/oder Tragschiene (15) eingebracht ist, auf der die Führungs- und/oder Tragschiene (15) ihren Montageabschnitt (MH) zur Anbringung an einer Trageinrichtung (21) aufweist.

13. Führungsschiene nach einem der Ansprüche 1 bis 12, **dadurch gekennzeichnet, dass** im Falle von zwei die Führungs- und/oder Tragschiene (15) durchsetzenden Kühlkanälen (K1, K2) in den Führungsschienen-Endbereichen (154') jeweils zwei Verbindungsbohrungen (154e, 154f) ausgebildet sind, die jeweils von einer der beiden Schmalseiten (151', 152') und vorzugsweise von der gleichen Schmalseite (151', 152') aus in die Führungs- und/oder Tragschiene (15) eingebracht sind, vorzugsweise von jener Schmalseite (151', 152'), an der benachbart dazu der Montageabschnitt (MH) zur Anbringung der Führungs- und/oder Tragschiene (15) an einer Trageinrichtung (21) ausgebildet ist.

14. Führungsschiene nach Anspruch 12 oder 13, **dadurch gekennzeichnet, dass** die Verbindungsbohrungen (154e, 154f) an ihren Bohrungsöffnungen (154'e, 154'f) verschlossen sind und vor dem verschlossenen Bohrloch (154'e, 154'f) von einer der beiden Breitseiten (15a, 15b) der Führungs- und/oder Tragschiene (15) ausgehend eine Anschlussbohrung (155) eingebracht ist, worüber das durch den zumindest einen Kühlkanal (K1, K2) fließende Kühlmedium ab- oder zugeführt oder zu einem Verteiler oder Anschluss zur weiteren Einleitung in eine nächste Führungs- und/oder Tragschiene weiterleitbar ist.

15. Führungsschiene nach einem der Ansprüche 1 bis 14, **dadurch gekennzeichnet, dass** von zumindest einer Schmalseite (151', 152') aus in Längsrichtung (LX) der Führungs- und/oder Tragschiene (15) versetzt liegend jeweils quer oder senkrecht zur jeweiligen Schmalseite (151', 152') verlaufende zusätzliche Quer- oder Sackbohrungen (157) eingebracht sind, in denen über die zugehörige Schmalseite (151', 152') nach außen hin überstehend Wärmeleitbolzen (181) und/oder Heat Pipes (182) eingesteckt sind.

16. Führungsschiene nach Anspruch 15, **dadurch gekennzeichnet, dass** die zusätzlichen Bohrlöcher (157) mit dem darin sitzenden Wärmeleitbolzen (181) und/oder den Heat Pipes (182) an den Stellen der Führungs- und/oder Tragschiene (15) vorgesehen sind, an denen der jeweilige entfernt zur zugehörigen Schmalseite (152, 151) liegende Durchdringungsbereich (DX1a; DX2a) jeweils zweier aufeinander folgender Querbohrungen (154, 154a - 154d) eines Kanals (K1, K2) ausgebildet ist.

17. Führungsschiene nach einem der Ansprüche 1 bis 15, **dadurch gekennzeichnet, dass** der in der Führungs- und/oder Tragschiene (15) zumindest eine vorgesehene Kühlkanal (K1) sich über mehr als 60%, insbesondere mehr als 70%, 80% oder mehr als 90% der gesamten Höhe (H) der Führungs- und/oder Tragschiene verlaufend erstreckt.

18. Führungsschiene nach einem der Ansprüche 1 bis 15, **dadurch gekennzeichnet, dass** die zumindest beiden vorgesehenen Kühlkanäle (K1, K2) in Richtung der Höhe (H) der Führungs- und/oder Tragschiene (15) versetzt zueinander liegen, und dass die Führungs- und/oder Tragschiene (15) über ihren Montageabschnitt (MH) an einer Tragstruktur (11) befestigt ist, die benachbart an der oberen und/oder unteren Schmalseite (151', 152') der Führungs- und/oder Tragschiene oder im mittleren Bereich der Führungs- und/oder Tragschiene (15) an der Außenfläche (15b) gegenüberliegend zur Kluppe angreift.

19. Führungsschiene nach einem der Ansprüche 1 bis 5, **dadurch gekennzeichnet, dass** das zwischen den beiden Halbschalen oder Hälften (15.1, 15.2) der Führungs- und/oder Tragschiene (15), die aus einem Metallteil bestehen oder Blechpakete oder -streifen umfassen, befindliche flexible Rohr (1154) verformbar und im montierten Zustand unter Ausbildung einer vorzugsweise planen Anlagefläche unter Vorspannung an den aufeinander zu weisenden Innenseiten (15.1', 15.2') der zugehörigen Halbschalen (15.1, 15.2) der Führungs- und/oder Tragschiene (15) anliegt.

20. Führungsschiene nach einem der Ansprüche 1 bis 5 oder 17, **dadurch gekennzeichnet, dass** die beiden Halbschalen (15.1, 15.2) planparallel ausgebildet sind und dass in dem verbleibenden, von dem zumindest einen flexiblen Rohr (1154) nicht ausgefüllten Zwischenraum zumindest abschnittsweise Abstandshalter (15.3, 15.4) vorgesehen sind.

21. Führungsschiene nach einem der Ansprüche 1 bis 5 oder 17, 18, **dadurch gekennzeichnet, dass** die beiden Halbschalen oder Hälften (15.1, 15.2) der Führungs- und/oder Tragschiene (15) aufeinander zu weisende Vorsprünge und/oder Anschläge (15.4) aufweisen, worüber die beiden Halbschalen (15.1, 15.2) in montiertem Zustand zumindest mittelbar aneinander anliegen, und dass Abstandsräume zwischen den beiden Halbschalen oder Hälften (15.1, 15.2) verbleiben, in welchen das zumindest eine flexible Rohr (1154) untergebracht ist.

22. Führungsschiene nach einem der Ansprüche 1 bis 5 oder 17 bis 19, **dadurch gekennzeichnet, dass** zumindest zwei flexible Rohre (1154) parallel zu den Breitseiten (15a, 15b) zu der Führungs- und/oder Tragschiene (15) versetzt liegend zwischen den beiden Halbschalen (15.1, 15.2) untergebracht sind.

23. Führungsschiene nach einem der Ansprüche 1 bis 5 oder 17 bis 20, **dadurch gekennzeichnet, dass** von einer Schmalseite (152') aus ein Schmiermittelkanal oder Schmiermittelkanäle (165) in Längsrichtung (LX) der Führungs- und/oder Tragschiene (15) versetzt liegend vorgesehen sind, die im Bereich des zumindest einen flexiblen Rohres (1154) enden, so dass Schmiermittel über kapillarisch ausgebildete Schmiermittelpfade (166) zwischen den Innenwandflächen (15.1', 15.2') der Halbschalen oder Hälften (15.1, 15.2) und der Außenwand des zumindest einen flexiblen Rohres (1154) zur gegenüberliegenden Schmalseite (151') hin ausbreitungsfähig ist und dort gegebenenfalls über dort vorgesehene kapillarisch vorgesehene Austrittskanäle austreten kann.

24. Führungsschiene nach einem der Ansprüche 1 bis 5 oder 17 bis 21, **dadurch gekennzeichnet, dass** die die zumindest beiden Halbschalen oder Hälften (15.1, 15.2) und das zumindest eine flexible Rohr (1154) umfassende Führungs- und/oder Tragschiene (15) mittels Befestigungsschrauben (1153) an einer Tragstruktur (21) befestigbar ist, indem die Schraubbefestigung (1153) die Halbschalen oder Hälften (15.1, 15.2) der Führungs- und/oder Tragschiene (15) in ihrem Montagebereich (MH) versetzt zu dem zumindest einen flexiblen Rohr (1154) liegend durchsetzt und mit der Tragstruktur (11) verbindet, gegebenenfalls unter Zwischenschaltung einer Wärmeisolierung (20) zwischen der Tragstruktur (11) und der daran anliegenden Führungs- und/oder Tragschiene (15).

25. Führungsschiene nach einem der Ansprüche 1 bis 5, **dadurch gekennzeichnet, dass** die in Längsrichtung (LX) der Führungs- und/oder Tragschiene (15) versetzt zueinander liegenden und von zumindest einer Schmalseite (151', 152') aus eingebrachten und nicht in Verbindung stehenden Bohrungen (157) insbesondere in Form von Sackbohrungen vorzugsweise parallel zueinander angeordnet sind, und dass die darin eingesteckten Wärmeleitbolzen (181) oder Heat Pipes (182) über die zugehörige Schmalseite (152', 151') überstehen und über weitere, damit fluchtende Bohrungen (157') in den parallel zur Schmalseite (152', 151') verlaufenden Kühlkanal (K3) hineinragen und dort enden.

26. Führungsschiene nach Anspruch 23, **dadurch gekennzeichnet, dass** die zusätzlichen Bohrungen (157) oder zusätzlichen Sackbohrungen (157) von der Schmalseite (151') aus in die Führungs- und/oder Tragschiene (15) eingebracht sind, an der auch der Montageabschnitt (MH) der Führungs- und/oder Tragschiene (15) zur Befestigung an einer Trageinrichtung (11) ausgebildet ist.

27. Führungsschiene nach einem der Ansprüche 1 bis 24, **dadurch gekennzeichnet, dass** die Führungs- und/oder Tragschiene (15) aus Metall oder einer Metalllegierung besteht, die gut wärmeleitfähig ist.

## Claims

1. Guide rail, in particular for a transport device or stretching unit, having the following features:
- a cooling device (KA) in the form of at least one cooling duct (K1, K2, K3) which can be flowed through by a coolant (18) is provided for the guide and/or carrier rail (15),
- the cooling device (KA) is constructed in such a way
a) that the at least one cooling duct (K1, K2) comprises a plurality of transverse holes (154; 154a-154d), which extend oblique to the longitudinal direction (LX) of the guide and/or carrier rail (15) and which are alternately formed at different angles of inclination (α, β) to the longitudinal direction (LX) of the guide and/or carrier rail (15) in such a way that in each case at least two successive transverse holes (154; 154a-154d) intersect in a penetration region (DX1 a, DX1 b; DX2a, DX2b) to form a continuous duct (K1, K2), and/or
b) that the guide and/or carrier rail (15) comprises at least two half shells or halves (15.1, 15.2), between which a flexible pipe (1554) is arranged sandwiched to form the at least one cooling duct (K1, K2), and/or
c) that the at least one cooling duct (K3) is arranged outside the guide and/or carrier rail (15) extending parallel thereto, and that a multiplicity of holes (157) are formed in the guide rail (151), which are positioned offset in the longitudinal direction (LX) of the guide and/or carrier rail (15) and orientated transverse and preferably perpendicular thereto, and into which heat lines (181) and/or heat pipes (182) are inserted, which protrude beyond the guide and/or carrier rail (15) and are thermally conductively linked to the at least one cooling duct (K3) extending outside the guide and/or carrier rail (15).

2. Guide rail according to claim 1, **characterised in that** the guide and/or carrier rail (15) has a rectangular cross section transverse to the longitudinal direction (LX) thereof, specifically so as to form an upper and a lower edge (151, 152) and/or an upper and a lower narrow face (151', 152') and two wide faces or sliding faces (15a, 15b), which extend mutually parallel and which are subdivided, in the transverse direction transverse to the longitudinal direction (LX) thereof, into a sliding and/or transport region (GH) and a mounting and holding region (MH), and **in that** the at least one cooling duct (K1, K2) is provided in the sliding and/or transport region (GH).

3. Guide rail according to either claim 1 or claim 2, **characterised in that** the guide and/or carrier rail can be bent or is bent without kinks together with the at least one cooling duct (K1, K2) formed therein and/or thereon, preferably in the transverse direction transverse to the wide faces (15a, 15b).

4. Guide rail according to any of claims 1 to 3, **characterised in that** the diameter (D) of the at least one cooling duct (K1, K2, K3) is more than 10 %, in particular more than 20 %, 30 %, 40 %, 50 %, 60 %, 70 % or more than 80 %, of the width (B) of the guide and/or carrier rail (16) and less than 90 %, in particular less than 80 %, 70 %, 60 %, 50 %, 40 % or less than 30 %, of the width (B) of the guide and/or carrier rail (15).

5. Guide rail according to any of claims 1 to 4, **characterised in that** at least two cooling ducts (K1, K2) are formed extending straight or in a zigzag shape through the guide and/or carrier rail (15) in the longitudinal direction (LX).

6. Guide rail according to any of claims 1 to 5, **characterised in that** the plurality of transverse holes (154) are each formed in the guide and/or carrier rail (15) from a narrow face (151', 152'), in such a way that two successive transverse holes (154; 154a, 154b, 154c, 154d) having an opposite-direction angle of inclination (+α, -α, +β, -β) to the longitudinal direction (LX) of the guide and/or carrier rail (15) have a penetration region (DX1a, DX1b; DX2a, DX2b) in each case, and as a result a zigzag-shaped cooling duct (K1, K2) is formed, the hole openings (154'; 154'a-154'd) on the associated narrow face (151', 152') of the guide and/or carrier rail (15) being closed, preferably by screwed-in and/or glued-in plug screws (161).

7. Guide rail according to any of claims 1 to 6, **characterised in that** transverse holes (154; 154a-154d) in the form of blind holes are formed in the guide and/or carrier rail (15) from each of the two narrow faces (151', 152'), transverse holes (154; 154a-154d) which are positioned offset in the longitudinal direction (LX) of the guide and/or carrier rail (15) intersecting in each case to form penetration regions (DX1a, DX1b; DX2a, DX2b), in such a way that two zigzag-shaped or zigzag-like cooling ducts (K1, K2) extending side by side are formed in the guide and/or carrier rail (15).

8. Guide rail according to any of claims 1 to 7, **characterised in that** the transverse holes (154; 154a, 154b) of the first cooling duct (K1) are formed from one narrow face (151') of the guide and/or carrier rail (15) at an alternating positive and negative angle of inclination (+α, - α), and **in that** the transverse holes (154; 154c, 154d) of the second cooling duct (K2) are formed from the opposite narrow face (152') of the guide and/or carrier rail (15) at an alternating angle of inclination (+β, -β).

9. Guide rail according to claim 8, **characterised in that** the angles of inclination (+α, -α, +β, -β) of the transverse holes (154; 154a-154d) of the two cooling ducts (K1, K2) are different.

10. Guide rail according to any of claims 7 to 9, **characterised in that** the transverse holes (154; 154a-154d) are formed as blind holes to a length such that the two cooling ducts (K1, K2) are separated from one another.

11. Guide rail according to any of claims 1 to 10, **characterised in that** at least some transverse holes (154) are provided which are formed long enough that, as part of one cooling duct (K1 or K2), they intersect with transverse holes (154; 154a-154d) of the second cooling duct (K2), in such a way that the two cooling ducts (K1, K2) are interconnected.

12. Guide rail according to any of claims 1 to 11, **characterised in that**, in the case of a cooling duct (K1, K2) penetrating the guide and/or carrier rail (15), a connecting hole (154e, 154f) is formed in the guide rail end regions (154') and is formed in the guide and/or carrier rail (15) from one of the two narrow faces (151', 152'), and preferably from the narrow face (151') on which the guide and/or carrier rail (15) comprises the mounting portion (MH) thereof for attachment to a carrier device (21).

13. Guide rail according to any of claims 1 to 12, **characterised in that**, in the case of two cooling ducts (K1, K2) penetrating the guide and/or carrier rail (15), two connecting holes (154e, 154f) are respectively formed in the guide rail end regions (154'), which are each formed in the guide and/or carrier rail (15) from one of the two narrow faces (151', 152') and preferably from the same narrow face (151', 152'), preferably from the narrow face (151', 152') on which the mounting portion (MH) for attaching the guide and/or carrier rail (15) to a carrier device (21) is formed adjacent thereto.

14. Guide rail according to either claim 12 or claim 13, **characterised in that** the connecting holes (154e, 154f) are closed at the hole openings (154'e, 154'f) thereof and, before the closed borehole (154'e, 154'f), starting from one of the two wide faces (15a, 15b) of the guide and/or carrier rail (15), a linking hole (155) is formed, via which the coolant flowing through the at least one cooling duct (K1, K2) is removed or supplied or can be passed on to a distributor or attachment for further introduction into a following guide and/or carrier rail.

15. Guide rail according to any of claims 1 to 14, **characterised in that** additional transverse or blind holes (157), which extend transverse or perpendicular to the respective narrow faces (151', 152') and into which thermal conductor bolts (181) and/or heat pipes (182) which extend outwards beyond the associated narrow face (151', 152') are introduced, are formed positioned offset in the longitudinal direction (LX) of the guide and/or support rail (15) from at least one narrow face (151', 152').

16. Guide rail according to claim 15, **characterised in that** the additional boreholes (157) along with the thermal conductor bolts (181) and/or heat pipes (182) positioned therein are provided at the locations of the guide and/or carrier rail (15) at which the relevant penetration region (DX1a; DX2a), positioned remote from the associated narrow face (152, 151), of in each case two successive transverse bolts (154, 154a-154d) of a duct (K1, K2) is formed.

17. Guide rail according to any of claims 1 to 15, **characterised in that** the at least one cooling duct (K1) provided in the guide and/or carrier rail (15) extends over more than 60 %, in particular more than 70 %, 80 % or more than 90 %, of the total height (H) of the guide and/or carrier rail.

18. Guide rail according to any of claims 1 to 15, **characterised in that** the at least two provided cooling ducts (K1, K2) are positioned mutually offset in the direction of the height (H) of the guide and/or carrier rail (15), and **in that** the guide and/or carrier rail (15) is fixed via the mounting portion (MH) thereof to a carrier structure (11), which acts on the outer face (15b) opposite the clip adjacent to the upper and/or lower narrow face (151', 152') of the guide and/or carrier rail or in the central region of the guide and/or carrier rail (15).

19. Guide rail according to any of claims 1 to 5, **characterised in that** the flexible pipe (1154), located between the two half shells or halves (15.1, 15.2) of the guide and/or carrier rail (15), which consist of a metal part or comprise laminated cores or metal strips, is deformable and, when mounted, is positioned biased against the mutually facing inner faces (15.1', 15.2') of the associated half shells (15.1, 15.2) of the guide and/or carrier rail (15) so as to form a preferably planar contact face.

20. Guide rail according to any of claims 1 to 5, **characterised in that** the two half shells (15.1, 15.2) are formed plane-parallel, and spacers (15.3, 15.4) are provided, at least in portions, in the remaining gap which is not filled up by the at least one flexible pipe (1154).

21. Guide rail according to any of claims 1 to 5 or 17 or 18, **characterised in that** the two half shells or halves (15.1, 15.2) of the guide and/or carrier rail (15) comprise mutually facing projections and/or stops (15.4), via which the two half shells (15.1, 15.2) are at least indirectly in contact with one another when mounted, and **in that** spaces, in which the at least one flexible pipe (1154) is accommodated, are left between the two half shells or halves (15.1, 15.2).

22. Guide rail according to any of claims 1 to 5 or 17 to 19, **characterised in that** at least two flexible pipes (1154) are accommodated, positioned offset parallel to the wide sides (15a, 15b) with respect to the guide and/or carrier rail (15), between the two half shells (15.1, 15.2).

23. Guide rail according to any of claims 1 to 5 or 17 to 20, **characterised in that** a lubricant duct or lubricant ducts (165) are provided, positioned offset in the longitudinal direction (LX) of the guide and/or carrier rail (15), from a narrow face (152'), and end in the region of the at least one flexible pipe (1154), in such a way that lubricant can propagate, via lubricant paths (166) formed as capillaries between the inner wall faces (15.1', 15.2') of the half shells or halves (15.1, 15.2) and the outer wall of the at least one flexible pipe (1154), to the opposite narrow face (151'), where it can optionally exit via outlet ducts provided there as capillaries.

24. Guide rail according to any of claims 1 to 5 or 17 to 21, **characterised in that** the guide and/or carrier rail (15), comprising at least two half shells or halves (15.1, 15.2) and at least one flexible pipe (1154), can be fixed to a carrier structure (21) by means of fixing screws (1153), **in that** the screw fastening (1153) penetrates the half shells or halves (15.1, 15.2) of the guide and/or carrier rail (15) in the mounting region (MH) thereof offset from the at least one flexible pipe (1154) and connects them to the carrier structure (11), optionally with the interposition of thermal insulation (20) between the carrier structure (11) and the guide and/or carrier rail (15) positioned thereon.

25. Guide rail according to any of claims 1 to 5, **characterised in that** the holes (157), in particular in the form of blind holes, which are positioned mutually offset in the longitudinal direction (LX) of the guide and/or carrier rail (15) and formed from at least one narrow face (151', 152') and not connected, are preferably arranged mutually parallel, and **in that** the thermal conductor bolts (181) or heat pipes (182) inserted into them protrude beyond the associated narrow face (152', 151') and project, via further holes (157') flush therewith, into the cooling duct (K3) extending parallel to the narrow face (152', 151'), and end therein.

26. Guide rail according to claim 23, **characterised in that** the additional holes (157) or additional blind holes (157) are formed in the guide and/or carrier rail (15) from the narrow face (151') on which the mounting portion (MH) of the guide and/or carrier rail (15) for fixing to a carrier device (11) is also formed.

27. Guide rail according to any of claims 1 to 24, **characterised in that** the guide and/or carrier rail (15) consists of metal or a metal alloy having good thermal conductivity.

## Revendications

1. Rail de guidage, en particulier pour un système de transport ou pour une installation d'étirage, avec les éléments techniques suivants :
- pour le rail de guidage et/ou rail porteur (15), il est prévu un dispositif de refroidissement (KA) sous la forme d'au moins un canal de refroidissement (K1, K2, K3) susceptible d'être traversé par un écoulement d'un fluide de refroidissement (18),
- le dispositif de refroidissement (KA) est ici réalisé de telle façon
a) que ledit au moins un canal de refroidissement (K1, K2) inclut plusieurs perçages transversaux (154 ; 154a-154d) qui s'étendent en oblique par rapport à la direction longitudinale (LX) du rail de guidage et/ou rail porteur (15), lesdits perçages transversaux étant ménagés en alternance avec des angles d'inclinaison différents (α, β) par rapport à la direction longitudinale (LX) du rail de guidage et/ou rail porteur (15) de telle façon qu'au moins deux perçages transversaux (154 ; 154a-154d) mutuellement successifs se recoupent dans une zone de traversée (DX1 a, DX1b ; DX2a, DX2b) en réalisant un canal continu (K1, K2), et/ou
b) que le rail de guidage et/ou rail porteur (15) inclut au moins deux demi-coques ou deux moitiés (15.1,15.2) entre lesquelles un tube flexible (1154) est agencé à la manière d'un sandwich en réalisant ledit au moins un canal de refroidissement (K1, K2), et/ou
c) que ledit au moins un canal de refroidissement (K3) est agencé à l'extérieur du rail de guidage et/ou rail porteur (15) en s'étendant parallèlement à celui-ci, et qu'une pluralité de perçages (157), qui sont disposés en décalage en direction longitudinale (LX) du rail de guidage et/ou rail porteur (15) et qui sont orientés transversalement et de préférence perpendiculairement à celui-ci, sont ménagés dans le rail de guidage (15), perçages dans lesquels sont enfichés des conduits thermiques (181) et/ou des tubes caloporteurs ("heat pipes") (182) qui dépassent au-delà du rail de guidage et/ou rail porteur (15) et qui sont reliés de manières thermoconductrice audit au moins un canal de refroidissement (K3) qui s'étend à l'extérieur du rail de guidage et/ou rail porteur (15).

2. Rail de guidage selon la revendication 1, **caractérisé en ce que** le rail de guidage et/ou rail porteur (15) présente une section transversale de forme rectangulaire perpendiculairement à sa direction longitudinale (LX), et ceci en formant une arête supérieure et une arête inférieure (151, 152) et/ou un petit côté supérieur et un petit côté inférieur (151', 152'), ainsi que deux grands côtés s'étendant parallèlement l'un à l'autre ou deux surfaces de glissement (15a, 15b) qui sont subdivisé(e)s en direction transversale et perpendiculairement à leur direction longitudinale (LX) en une zone de glissement et/ou de transport (GH) et en une zone de montage et de maintien (MH), et **en ce que** ledit au moins un canal de refroidissement (K1, K2) est prévu dans la zone de glissement et/ou de transport (GH).

3. Rail de guidage selon la revendication 1 ou 2, **caractérisé en ce que** le rail de guidage et/ou rail porteur avec ledit au moins un canal de refroidissement (K1, K2) réalisé à l'intérieur et/ou contre celui-ci, est fléchi ou capable de fléchir sans pliage, de préférence en direction transversale perpendiculairement aux grands côtés (15a, 15b).

4. Rail de guidage selon l'une des revendications 1 à 3, **caractérisé en ce que** le diamètre (D) dudit au moins un canal de refroidissement (K1, K2, K3) est supérieur à 10 %, en particulier supérieur à 20 %, 30 %, 40 %, 50 %, 60 %, 70 % ou supérieur à 80 % de la largeur (B) du rail de guidage et/ou rail porteur (15) et est en particulier inférieur à 80 %, 70 %, 60 %, 50 %, 40 %, ou inférieur à 30 % de la largeur (B) du rail de guidage et/ou rail porteur (15).

5. Rail de guidage selon l'une des revendications 1 à 4, **caractérisé en ce qu'**au moins deux canaux de refroidissement (K1, K2) sont réalisés en direction longitudinale (LX) à travers le rail de guidage et/ou rail porteur (15) de manière à s'étendre en ligne droite ou en formant un zigzag.

6. Rail de guidage selon l'une des revendications 1 à 5, **caractérisé en ce que** lesdits plusieurs perçages transversaux (154) sont respectivement menés depuis un petit côté (151', 152') dans le rail de guidage et/ou rail porteur (15), de telle manière que deux perçages transversaux mutuellement successifs (154 ; 154a, 154b, 154c, 154d) présentent chacun, par rapport à la direction longitudinale (LX) du rail de guidage et/ou rail porteur (15) une zone de traversée respective (DX1a, DX1b ; DX2a, DX2b) avec des angles d'inclinaison en sens opposés (+α, -α ; +β, -β), et qu'il se forme grâce à cela un canal de refroidissement (K1, K2) en forme de zigzag, et les ouvertures des perçages (154' ; 154'a-154'd) au niveau du petit côté associé (151', 152') du rail de guidage et/ou rail porteur (15) sont obturées, de préférence au moyen de vis d'obturation (161) vissées et/ou collées.

7. Rail de guidage selon l'une des revendications 1 à 6, **caractérisé en ce que** des perçages transversaux respectifs (154 ; 154a-154d), sous la forme de perçages borgnes, sont ménagés depuis les deux petits côtés (151', 152') dans le rail de guidage et/ou rail porteur (15), et des perçages transversaux (154 ; 154a-154d) disposés respectivement en décalage en direction longitudinale (LX) du rail de guidage et/ou rail porteur (15) se recoupent en formant des zones de traversée (DX1a, DX1b ; DX2a, DX2b) de telle façon qu'il se forme de canaux de refroidissement (K1, K2) en forme de zigzag ou s'étendant l'un à côté de l'autre de manière semblable à un zigzag, dans le rail de guidage et/ou rail porteur (15).

8. Rail de guidage selon l'une des revendications 1 à 9, **caractérisé en ce que** les perçages transversaux (154 ; 154a, 154b) du premier canal de refroidissement (K1) sont ménagés depuis un petit côté (151') du rail de guidage et/ou rail porteur (15) sous des angles d'inclinaison alternativement positif et négatif (+α, -α), et **en ce que** les perçages transversaux (154 ; 154c, 154d) du second canal de refroidissement (K2) sont ménagés depuis le petit côté opposé (152') du rail de guidage et/ou rail porteur (15) avec des angles d'inclinaison alternés (+β, -β).

9. Rail de guidage selon la revendication 8, **caractérisé en ce que** les angles d'inclinaison (+α, -α ; +β, -β) des perçages transversaux (154 ; 154a-154d) des deux canaux de refroidissement (K1, K2) sont différents.

10. Rail de guidage selon l'une des revendications 7 à 9, **caractérisé en ce que** les perçages transversaux (154 ; 154a-154d) sont réalisés sous forme de perçages borgnes d'une longueur telle que les deux canaux de refroidissement (K1, K2) sont séparés l'un de l'autre.

11. Rail de guidage selon l'une des revendications 1 à 10, **caractérisé en ce qu'**il est prévu qu'au moins quelques-uns des perçages transversaux (154) soient réalisés d'une longueur telle qu'ils se recoupent en tant que partie de l'un des canaux de refroidissement (K1 ou K2) avec un perçage transversal (154 ; 154a-154d) du second canal de refroidissement (K2), de sorte que les deux canaux de refroidissement (K1, K2) sont reliés l'un à l'autre.

12. Rail de guidage selon l'une des revendications 1 à 11, **caractérisé en ce que**, dans le cas d'un canal de refroidissement (K1, K2) qui traverse le rail de guidage et/ou rail porteur (15), un perçage de liaison (154e, 154f) est réalisé dans le rail de guidage et/ou rail porteur (15) dans les zones terminales du rail de guidage (154'), perçage de liaison qui est ménagé depuis l'un des deux petits côtés (151', 152') et de préférence depuis le petit côté (151') sur lequel le rail de guidage et/ou rail porteur (15) comprend sa portion de montage (MH) pour le montage sur un dispositif porteur (21).

13. Rail de guidage selon l'une des revendications 1 à 12, **caractérisé en ce que**, dans le cas de deux canaux de guidage (K1, K2) qui traversent le rail de guidage et/ou rail porteur (15), deux perçages de liaison respectifs (154e, 154f) sont réalisés dans les zones terminales du rail de guidage (154'), perçages de liaison qui sont ménagés respectivement depuis l'un des deux petits côtés (151', 152'), et de préférence depuis le même petit côté (151', 152'), dans le rail de guidage et/ou rail porteur (15), de préférence depuis celui des petits côtés (151', 152') sur lequel est réalisée au voisinage la portion de montage (MA) pour le montage du rail de guidage et/ou rail porteur (15) sur un dispositif porteur (21).

14. Rail de guidage selon la revendication 12 ou 13, **caractérisé en ce que** les perçages de liaison (154e, 154f) sont obturés au niveau de leurs ouvertures (154'e, 154'f), et un perçage de raccordement (155) est ménagé avant le perçage obturé (154'e, 154'f) en partant de l'un des deux grands côtés (15a, 15b) du rail de guidage et/ou rail porteur (15), perçage de raccordement au moyen duquel le fluide de refroidissement qui s'écoule à travers ledit au moins un canal de refroidissement (K1, K2) peut être amené ou évacué ou peut être encore amené à passer vers un répartiteur ou vers un raccord pour être ensuite injecté dans un rail de guidage et/ou rail porteur suivant.

15. Rail de guidage selon l'une des revendications 1 à 14, **caractérisé en ce que** des perçages transversaux ou des perçages borgnes supplémentaires (157) sont ménagés depuis au moins un petit côté (151', 152'), qui s'étendent respectivement transversalement ou perpendiculairement au petit côté respectif (151', 152'), de manière à s'étendre en décalage en direction longitudinale (LX) du rail de guidage et/ou rail porteur (15), perçages dans lesquels sont enfichés des goujons thermoconducteurs (181) et/ou des tubes caloporteurs (182) qui dépassent vers l'extérieur au-delà du petit côté associé (151', 152').

16. Rail de guidage selon la revendication 15, **caractérisé en ce que** les perçages supplémentaires (157) avec les goujons thermoconducteurs (181) et/ou les tubes caloporteurs (182) engagés dans ceux-ci sont prévus aux emplacements du rail de guidage et/ou rail porteur (15) auxquels est réalisée la zone de traversée (DX1a ; DX2a) respective, située en éloignement du petit côté associé (152, 151), de deux perçages transversaux mutuellement successifs (154, 154a-154d) d'un canal (K1, K2).

17. Rail de guidage selon l'une des revendications 1 à 15, **caractérisé en ce que** ledit au moins un canal de refroidissement (K1) prévu dans le rail de guidage et/ou rail porteur (15) s'étend sur plus de 60 %, en particulier plus de 70 %, 80 % ou plus de 90 % de la hauteur totale (H) du rail de guidage et/ou rail porteur.

18. Rail de guidage selon l'une des revendications 1 à 15, **caractérisé en ce que** lesdits au moins deux canaux de refroidissement (K1, K2) prévus sont situés en décalage l'un par rapport à l'autre en direction de la hauteur (H) du rail de guidage et/ou rail porteur (15), et **en ce que** le rail de guidage et/ou rail porteur (15) est fixé via sa portion de montage (MH) sur une structure porteuse (11) qui attaque la surface extérieure (15b) à l'opposé de la pince, au voisinage du petit côté supérieur et/ou du petit côté inférieur (151', 152') du rail de guidage et/ou rail porteur ou encore dans la zone médiane du rail de guidage et/ou rail porteur (15).

19. Rail de guidage selon l'une des revendications 1 à 5, **caractérisé en ce que** le tube flexible (1154), qui se trouve entre les deux demi-coques ou les deux moitiés (15.1, 15.2) du rail de guidage et/ou rail porteur (15), lesquelles sont formées d'une pièce métallique ou incluent des empilements de tôles ou des rubans de tôles, est déformable et, dans l'état monté il s'applique sous précontrainte contre les côtés intérieurs orientés l'un vers l'autre (15.1', 15.2'), en formant une surface d'appui de préférence plane, des demi-coques associées (15.1, 15.2) du rail de guidage et/ou rail porteur (15).

20. Rail de guidage selon l'une des revendications 1 à 5, ou 17, **caractérisé en ce que** les deux demi-coques (15.1, 15.2) sont réalisées dans des plans parallèles, et **en ce que** dans l'espace intermédiaire restant, qui n'est pas rempli par ledit au moins un tube flexible (1154) il est prévu au moins localement des éléments d'écartement (15.3, 15.4).

21. Rail de guidage selon l'une des revendications 1 à 5 ou 17 ou 18, **caractérisé en ce que** les deux demi-coques ou les deux moitiés (15.1, 15.2) du rail de guidage et/ou rail porteur (15) comportent des saillies et/ou des butées (15.4) tournées les unes vers les autres, au moyen desquelles les deux demi-coques (15.1, 15.2) s'appuient l'une contre l'autre au moins indirectement dans l'état monté, et **en ce qu'**il demeure des espaces entre les deux demi-coques ou les deux moitiés (15.1, 15.2), dans lesquels est logé ledit au moins un tube flexible (1154).

22. Rail de guidage selon l'une des revendications 1 à 5 ou 17 à 19, **caractérisé en ce qu'**au moins deux tubes flexibles (1554) sont logés entre les deux demi-coques (15.1, 15.2) parallèlement aux grands côtés (15a, 15b) et situés en décalage par rapport au rail de guidage et/ou rail porteur (15).

23. Rail de guidage selon l'une des revendications 1 à 5 ou 17 à 20, **caractérisé en ce qu'**il est prévu un ou plusieurs canaux à lubrifiant (65) partant d'un petit côté (152') et situés en décalage en direction longitudinale (LX) du rail de guidage et/ou rail porteur (15), canaux qui se terminent dans la région dudit au moins un tube flexible (1154), de sorte qu'un lubrifiant est en mesure de se propager via des trajets à lubrifiant réalisés sous forme capillaire entre les surfaces des parois intérieures (15.', 15.2') des demi-coques ou des moitiés (15.1,15.2) et la paroi extérieure dudit au moins un tube flexible (1154) en direction du petit côté opposé (151'), et est capable de sortir à cet endroit, le cas échéant via des canaux de sortie prévus à cet endroit sous forme capillaire.

24. Rail de guidage selon l'une des revendications 1 à 5 ou 17 à 21, **caractérisé en ce que** le rail de guidage et/ou rail porteur (15) qui inclut lesdites au moins deux demi-coques ou deux moitiés (15.1,15.2) et ledit au moins un tube flexible (1154) est susceptible d'être fixé au moyen de vis de fixation (1153) sur une structure porteuse (21) du fait que la fixation vissée (1153) traverse les demi-coques ou les moitiés (15.1, 15.2) du rail de guidage et/ou rail porteur (15) dans sa zone de montage (MH) en étant située décalée par rapport audit au moins un tube flexible (1154) et les relie à la structure porteuse (11), le cas échéant avec interposition d'une isolation thermique (20) entre la structure porteuse (11) et le rail de guidage et/ou rail porteur (15) appliqué contre celle-ci.

25. Rail de guidage selon l'une des revendications 1 à 5, **caractérisé en ce que** les perçages ménagés en direction longitudinale (LX) du rail de guidage et/ou rail porteur (15) en décalage les uns par rapport aux autres à partir d'au moins un petit côté (151', 152') mais qui ne sont pas en liaison, en particulier sous la forme de perçages borgnes, sont agencés de préférence parallèlement les uns aux autres, et **en ce que** les goujons thermoconducteurs (181) ou les tubes caloporteurs (182) enfichés dans ceux-ci, dépassent au-delà du petit côté associé (152', 151') et, via d'autres perçages (157') alignés avec ceux-ci, ils pénètrent dans le canal de refroidissement (K3) qui s'étend parallèlement aux petits côtés (152', 151') et se terminent à cet endroit.

26. Rail de guidage selon la revendication 23, **caractérisé en ce que** les perçages supplémentaires (157) ou les perçages borgnes supplémentaires (157) sont ménagés dans le rail de guidage et/ou rail porteur (15) en partant depuis le petit côté (151') sur lequel est également réalisée la portion de montage (MH) du rail de guidage et/ou rail porteur (15) pour la fixation sur un dispositif porteur (11).

27. Rail de guidage selon l'une des revendications 1 à 24, **caractérisé en ce que** le rail de guidage et/ou rail porteur (15) est en métal ou en un alliage métallique qui présente une bonne conductibilité thermique.
